# EUROPEAN PATENT APPLICATION

(11) **EP 4 697 853 A1**
(43) Date of publication of application: **18.02.2026**
(21) Application number: 24802656.9
(22) Date of filing: 02.04.2024
(51) Int. Cl.: H04W 76/27

(54) **COMMUNICATION METHOD AND COMMUNICATION APPARATUS**

(30) Priority: 11.05.2023 CN 202310531939
(71) Applicant: Huawei Technologies Co., Ltd., Shenzhen, Guangdong 518129 (CN)
(72) Inventor: ZHU, Shichao, Shenzhen, Guangdong 518129 (CN); ZHU, Yuanping, Shenzhen, Guangdong 518129 (CN); SUN, Fei, Shenzhen, Guangdong 518129 (CN)
(74) Representative: MERH-IP Matias Erny Reichl Hoffmann Patentanwälte PartG mbB
(86) International application number: PCT/CN2024/085603
(87) International publication number: WO 2024/230369

(57) **Abstract**

This application provides a communication method, including: A first donor node receives IAB authorization information, where the IAB authorization information indicates an authorization status of a first IAB node, the first IAB node includes a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes; and the first donor node determines, based on the IAB authorization information, whether the first IAB node is allowed to serve UE. When the IAB authorization information is updated, latest IAB authorization information is notified to a CU of an IAB-DU, so that the CU of the IAB-DU can determine, based on the latest authorization information, whether an IAB node is allowed to serve UE. This helps a network side flexibly control the IAB node.

## Description

This application claims priority to Chinese Patent Application No. 202310531939.X, filed with the China National Intellectual Property Administration on May 11, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a network including an integrated access and backhaul (integrated access and backhaul, IAB) node, a transmission path between user equipment (User Equipment, UE) and an IAB donor (IAB donor, or referred to as a donor node (donor node), or referred to as a donor base station donor gNB) includes a plurality of transmission links, including at least one wireless backhaul link (Backhaul link) and one wireless access link (Access link). The wireless access link is a communication link between the UE and a relay node (or referred to as an IAB node, IAB node). The wireless backhaul link is a communication link between IAB nodes or between the IAB node and the donor node. Service data of the UE is transmitted by connecting the IAB node and the IAB donor through the wireless backhaul link.

The IAB node includes a mobile termination (mobile termination, MT) part and a distributed unit (distributed unit, DU) part. When facing a parent node of the IAB node, the IAB node may serve as a terminal device, that is, a role of the MT. When facing a child node (the child node may be another IAB node or common UE) of the IAB node, the IAB node is considered as a network device, that is, a role of the DU. The donor node is an access network element having a complete base station (gNB) function, and includes a central unit (central unit, CU) and a distributed unit (distributed unit, DU). The donor node is connected to a core network (for example, connected to a 5G core network) that serves the UE.

In this application, an MT in an IAB node is referred to as an IAB-MT, a DU in the IAB node is referred to as an IAB-DU, a CU in a donor node that establishes an RRC connection to the IAB-MT is referred to as a CU of the IAB-MT, and a CU in a donor node that establishes an F1 connection to the IAB-DU is referred to as a CU of the IAB-DU.

When the IAB node accesses a network or an authorization status changes, IAB authorization information needs to be obtained from an access and mobility management function (Access and Mobility Management Function, AMF) network element in the core network. The IAB authorization information is authorization status information of the IAB-MT (or referred to as authorization status information of the IAB node). The authorization information is carried in context-related information of the IAB-MT, and is sent by the AMF of the IAB-MT to the CU of the IAB-MT.

In many scenarios (for example, an IAB node migration scenario), the CU of the IAB-MT may be different from the CU of the IAB-DU. In some implementations, the CU of the IAB-DU also needs to know the IAB authorization information of the IAB-MT. For example, when the IAB node initially accesses the network, if the CU of the IAB-MT configures a default configuration for the MT, and the IAB-DU sends an F1 interface setup request to the CU of the IAB-DU, the CU of the IAB-DU needs to know whether the IAB node is authorized or not authorized, to perform a corresponding operation (for example, when the IAB node is not authorized, the F1 interface setup request of the IAB-DU is rejected). However, in the conventional technology, how the CU of the IAB-DU learns of current IAB authorization information when the CU of the IAB-MT is different from the CU of the IAB-DU is not considered.

### SUMMARY

This application provides a communication method and a communication apparatus. When IAB authorization information is updated, latest IAB authorization information is notified to a CU of an IAB-DU, so that the CU of the IAB-DU can determine, based on the authorization information, whether to delete an F1 interface/whether to allow establishment of an F1 interface/whether to switch off a cell of the IAB-DU/whether to configure a cell of the IAB-DU to forbid UE access/the like. This helps a network side flexibly control an IAB node, and meets a requirement of allowing or forbidding working of the IAB node within a specific time/space range.

According to a first aspect, a communication method is provided. The method may be performed by a donor node, or may be performed by a chip or a circuit configured in a donor node. This is not limited in this application.

The method includes: A first donor node receives integrated access and backhaul IAB authorization information, where the IAB authorization information indicates an authorization status of a first IAB node, the first IAB node includes a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes; and the first donor node determines, based on the IAB authorization information, whether the first IAB node is allowed to serve UE.

According to the solution in this application, when IAB authorization information is updated, latest IAB authorization information is notified to a CU of an IAB-DU, so that the CU of the IAB-DU can determine, based on the authorization information, whether to delete an F1 interface/whether to allow establishment of an F1 interface/whether to switch off a cell of the IAB-DU/whether to configure a cell of the IAB-DU to forbid UE access/the like.

According to a second aspect, a communication method is provided. The method may be performed by a donor node, or may be performed by a chip or a circuit configured in a donor node. This is not limited in this application.

The method includes: A second donor node sends integrated access and backhaul IAB authorization information to a first donor node, where the IAB authorization information indicates an authorization status of a first IAB node, the first IAB node includes a first distributed unit and a first mobile termination, the first mobile termination has an RRC connection to the second donor node, and the first distributed unit has an F1 connection to or attempts to establish an F1 connection to the first donor node.

In a possible implementation, before the second donor node sends the IAB authorization information to the first donor node, the method further includes: The second donor node receives the IAB authorization information from an access and mobility management function AMF in a core network.

In a possible implementation, before the second donor node sends the IAB authorization information to the first donor node, the method further includes: The second donor node receives identification information of the first donor node from a third donor node, where the third donor node is a donor node that has an RRC connection to the first mobile termination before the first mobile termination establishes an RRC connection to the second donor node.

In a possible implementation, that the second donor node sends the IAB authorization information to the first donor node includes: The second donor node sends the IAB authorization information to the first donor node based on the identification information of the first donor node.

According to a third aspect, a communication method is provided. The method may be performed by a donor node, or may be performed by a chip or a circuit configured in a donor node. This is not limited in this application.

The method includes: A third donor node sends integrated access and backhaul IAB authorization information to a first donor node, where the IAB authorization information indicates an authorization status of a first IAB node, the first IAB node includes a first distributed unit and a first mobile termination, the first mobile termination has an RRC connection to a second donor node, the third donor node is a donor node that has an RRC connection to the first mobile termination before the first mobile termination establishes an RRC connection to the second donor node, and the first distributed unit has an F1 connection to or attempts to establish an F1 connection to the first donor node.

In a possible implementation, before the third donor node sends the IAB authorization information to the first donor node, the method further includes: The third donor node receives the IAB authorization information from the second donor node.

According to a fourth aspect, a communication method is provided. The method may be performed by an IAB node, or may be performed by a chip or a circuit configured in an IAB node. This is not limited in this application.

The method includes: A first integrated access and backhaul IAB node sends IAB authorization information to a first donor node, where the IAB authorization information indicates an authorization status of the first IAB node, the first IAB node includes a first distributed unit and a first mobile termination, the first mobile termination has an RRC connection to a second donor node, and the first distributed unit has an F1 connection to or attempts to establish an F1 connection to the first donor node.

In a possible implementation, before the first IAB node sends the IAB authorization information to the first donor node, the method further includes: The first IAB node receives the IAB authorization information from an access and mobility management function AMF in a core network or from the second donor node; or the first IAB node receives the IAB authorization information from a fourth donor node, where the fourth donor node is a donor node that has an F1 connection to the first distributed unit before the first distributed unit establishes an F1 connection to the first donor node.

According to a fifth aspect, a communication method is provided. The method may be performed by an AMF, or may be performed by a chip or a circuit configured in an AMF. This is not limited in this application.

The method includes: An access and mobility management function AMF in a core network sends integrated access and backhaul IAB authorization information to a first donor node, where the IAB authorization information indicates an authorization status of a first integrated access and backhaul IAB node, the first IAB node includes a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes.

In a possible implementation, before the AMF sends the IAB authorization information to the first donor node, the method further includes: The AMF receives identification information of the first donor node that is sent by the first IAB node.

In a possible implementation, that the AMF sends the IAB authorization information to the first donor node includes: The AMF sends the IAB authorization information to the first donor node based on the identification information of the first donor node.

In a possible implementation, before the AMF sends the IAB authorization information to the first donor node, the method further includes: The AMF receives identification information of the first donor node that is sent by the second donor node.

In a possible implementation, that the AMF sends the IAB authorization information to the first donor node includes: The AMF sends the IAB authorization information to the first donor node based on the identification information of the first donor node.

According to a sixth aspect, a communication method is provided. The method may be performed by a donor node, or may be performed by a chip or a circuit configured in a donor node. This is not limited in this application.

The method includes: A fourth donor node sends integrated access and backhaul IAB authorization information to a first donor node, where the IAB authorization information indicates an authorization status of a first IAB node, the first IAB node includes a first distributed unit and a first mobile termination, the first distributed unit includes a first logical distributed unit and a second logical distributed unit, the first mobile termination has an RRC connection to a second donor node, the first logical distributed unit has an F1 connection to the fourth donor node, and the second logical distributed unit has an F1 connection to or attempts to establish an F1 connection to the first donor node.

According to a seventh aspect, a communication method is provided. The method may be performed by an IAB node, or may be performed by a chip or a circuit configured in an IAB node. This is not limited in this application.

The method includes: A first integrated access and backhaul IAB node sends identification information of a first donor node to an access and mobility management function AMF in a core network, where the first IAB node includes a first distributed unit and a first mobile termination, the first mobile termination has an RRC connection to a second donor node, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

According to an eighth aspect, a communication method is provided. The method may be performed by a donor node, or may be performed by a chip or a circuit configured in a donor node. This is not limited in this application.

The method includes: A second donor node sends identification information of a first donor node to an access and mobility management function AMF in a core network, where the second donor node has an RRC connection to a first mobile termination, the first mobile termination is a mobile termination in a first integrated access and backhaul IAB node, the first IAB node further includes a first distributed unit, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

According to a ninth aspect, a communication method is provided. The method may be performed by a donor node, or may be performed by a chip or a circuit configured in a donor node. This is not limited in this application.

The method includes: A third donor node sends identification information of a first donor node to a second donor node, where the second donor node is a donor node that has an RRC connection to a first mobile termination, the first donor node is a donor node that has an F1 connection to or attempts to establish an F1 connection to a first distributed unit, and the third donor node is a donor node that has an RRC connection to the first mobile termination before the first mobile termination establishes an RRC connection to the second donor node.

According to a tenth aspect, a communication apparatus is provided, including: a receiving module, configured to receive integrated access and backhaul IAB authorization information, where the IAB authorization information indicates an authorization status of a first IAB node, the first IAB node includes a first distributed unit and a first mobile termination, the first mobile termination has an RRC connection to a second donor node, the first distributed unit has an F1 connection to or attempts to establish an F1 connection to a first donor node, and the first donor node and the second donor node are different donor nodes; and a processing module, configured to determine, based on the IAB authorization information, whether the first IAB node is allowed to serve UE.

According to an eleventh aspect, a communication apparatus is provided. The apparatus is a donor node that has an RRC connection to a first mobile termination, and the apparatus includes a sending module, configured to send integrated access and backhaul IAB authorization information to a first donor node, where the IAB authorization information indicates an authorization status of a first IAB node, the first IAB node includes a first distributed unit and the first mobile termination, and the first distributed unit has an F1 connection to or attempts to establish an F1 connection to the first donor node.

In a possible implementation, the apparatus further includes a receiving module, configured to receive the IAB authorization information from an access and mobility management function AMF in a core network.

In a possible implementation, the receiving module is further configured to receive identification information of the first donor node from a third donor node, where the third donor node is a donor node that has an RRC connection to the first mobile termination before the first mobile termination establishes an RRC connection to a second donor node.

In a possible implementation, that the sending module sends the IAB authorization information to the first donor node includes: The sending module sends the IAB authorization information to the first donor node based on the identification information of the first donor node.

According to a twelfth aspect, a communication apparatus is provided. The apparatus is a donor node that has an RRC connection to a first mobile termination before the first mobile termination establishes an RRC connection to a second donor node, and the apparatus includes a sending module, configured to send integrated access and backhaul IAB authorization information to a first donor node, where the IAB authorization information indicates an authorization status of a first IAB node, the first IAB node includes a first distributed unit and the first mobile termination, the first mobile termination has an RRC connection to the second donor node, and the first distributed unit has an F1 connection to or attempts to establish an F1 connection to the first donor node.

In a possible implementation, the apparatus further includes a receiving module, configured to receive the IAB authorization information from the second donor node.

According to a thirteenth aspect, a communication apparatus is provided. The apparatus is an integrated access and backhaul IAB node, and the apparatus includes a sending module, configured to send IAB authorization information to a first donor node, where the IAB authorization information indicates an authorization status of the first IAB node, the first IAB node includes a first distributed unit and a first mobile termination, the first mobile termination has an RRC connection to a second donor node, and the first distributed unit has an F1 connection to or attempts to establish an F1 connection to the first donor node.

In a possible implementation, the apparatus further includes a receiving module, configured to receive the IAB authorization information from an access and mobility management function AMF in a core network or from the second donor node; or the first IAB node receives the IAB authorization information from a fourth donor node, where the fourth donor node is a donor node that has an F1 connection to the first distributed unit before the first distributed unit establishes an F1 connection to the first donor node.

According to a fourteenth aspect, a communication apparatus is provided. The apparatus is an access and mobility management function AMF, in a core network, that serves an integrated access and backhaul IAB node, and the apparatus includes a sending module, configured to send IAB authorization information to a first donor node, where the IAB authorization information indicates an authorization status of a first integrated access and backhaul IAB node, the first IAB node includes a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes.

In a possible implementation, the apparatus further includes a receiving module, configured to receive identification information of the first donor node that is sent by the first IAB node.

In a possible implementation, that the sending module sends the IAB authorization information to the first donor node includes: The AMF sends the IAB authorization information to the first donor node based on the identification information of the first donor node.

In a possible implementation, the receiving module is further configured to receive identification information of the first donor node that is sent by the second donor node.

In a possible implementation, that the sending module sends the IAB authorization information to the first donor node includes: The AMF sends the IAB authorization information to the first donor node based on the identification information of the first donor node.

According to a fifteenth aspect, a communication apparatus is provided. The apparatus is a donor node that has an F1 connection to a first logical distributed unit, and the apparatus includes a sending module, configured to send integrated access and backhaul IAB authorization information to a first donor node, where the IAB authorization information indicates an authorization status of a first IAB node, the first IAB node includes a first distributed unit and a first mobile termination, the first distributed unit includes the first logical distributed unit and a second logical distributed unit, the first mobile termination has an RRC connection to a second donor node, and the second logical distributed unit has an F1 connection to or attempts to establish an F1 connection to the first donor node.

According to a sixteenth aspect, a communication apparatus is provided, including a sending module, configured to send identification information of a first donor node to an access and mobility management function AMF in a core network, where the first IAB node includes a first distributed unit and a first mobile termination, the first mobile termination has an RRC connection to a second donor node, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

According to a seventeenth aspect, a communication apparatus is provided, including a sending module, configured to send identification information of a first donor node to an access and mobility management function AMF in a core network, where a second donor node has an RRC connection to a first mobile termination, the first mobile termination is a mobile termination in a first integrated access and backhaul IAB node, the first IAB node further includes a first distributed unit, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

According to an eighteenth aspect, a communication apparatus is provided, including a sending module, configured to send identification information of a first donor node to a second donor node, where the second donor node is a donor node that has an RRC connection to a first mobile termination, the first donor node is a donor node that has an F1 connection to or attempts to establish an F1 connection to a first distributed unit, and the third donor node is a donor node that has an RRC connection to the first mobile termination before the first mobile termination establishes an RRC connection to the second donor node.

According to a nineteenth aspect, a wireless communication apparatus is provided, including modules or units configured to perform the method in any one of the first aspect or the possible implementations of the first aspect.

According to a twentieth aspect, a wireless communication apparatus is provided, including modules or units configured to perform the method in any one of the second aspect or the possible implementations of the second aspect.

According to a twenty-first aspect, a wireless communication apparatus is provided, including modules or units configured to perform the method in any one of the third aspect or the possible implementations of the third aspect.

According to a twenty-second aspect, a wireless communication apparatus is provided, including modules or units configured to perform the method in any one of the fourth aspect or the possible implementations of the fourth aspect.

According to a twenty-third aspect, a wireless communication apparatus is provided, including modules or units configured to perform the method in any one of the fifth aspect or the possible implementations of the fifth aspect.

According to a twenty-fourth aspect, a wireless communication apparatus is provided, including modules or units configured to perform the method in any one of the sixth aspect or the possible implementations of the sixth aspect.

According to a twenty-fifth aspect, a wireless communication apparatus is provided, including modules or units configured to perform the method in any one of the seventh aspect or the possible implementations of the seventh aspect.

According to a twenty-sixth aspect, a wireless communication apparatus is provided, including modules or units configured to perform the method in any one of the eighth aspect or the possible implementations of the eighth aspect.

According to a twenty-seventh aspect, a wireless communication apparatus is provided, including modules or units configured to perform the method in any one of the ninth aspect or the possible implementations of the ninth aspect.

According to a twenty-eighth aspect, a communication device is provided, including a processor. The processor is coupled to a storage, and may be configured to perform the method in the first aspect and the possible implementations of the first aspect, the second aspect and the possible implementations of the second aspect, the third aspect and the possible implementations of the third aspect, the sixth aspect and the possible implementations of the sixth aspect, the eighth aspect and the possible implementations of the eighth aspect, or the ninth aspect and the possible implementations of the ninth aspect. In a possible implementation, the communication device further includes the storage. In a possible implementation, the communication device further includes a communication interface, and the processor is coupled to the communication interface.

In an implementation, the communication device is a donor node. When the communication device is a donor node, the communication interface may be a transceiver or an input/output interface.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twenty-ninth aspect, a communication device is provided, including a processor. The processor is coupled to a storage, and may be configured to execute instructions in the storage, to implement the method in the fourth aspect and the possible implementations of the fourth aspect or the seventh aspect and the possible implementations of the seventh aspect. In a possible implementation, the communication device further includes the storage. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is an IAB node. When the communication device is an IAB node, the communication interface may be a transceiver or an input/output interface. In a possible implementation, a transceiver may be a transceiver circuit. In a possible implementation, an input/output interface may be an input/output circuit.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a thirtieth aspect, a communication device is provided, including a processor. The processor is coupled to a storage, and may be configured to execute instructions in the storage, to implement the method in the fifth aspect and the possible implementations of the fifth aspect. In a possible implementation, the communication device further includes the storage. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is an AMF. When the communication device is an AMF, the communication interface may be a transceiver or an input/output interface. In a possible implementation, a transceiver may be a transceiver circuit. In a possible implementation, an input/output interface may be an input/output circuit.

In another implementation, the communication device is a chip or a chip system. When the communication device is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a thirty-first aspect, a communication apparatus is provided, including an input circuit, an output circuit, and a processing circuit. The processing circuit is configured to: receive a signal through the input circuit, and transmit a signal through the output circuit, to implement the method in any one of the first aspect to the ninth aspect and any one of the possible implementations of the aspects.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example without limitation to, a receiver, and a signal output by the output circuit may be output to and transmitted by, for example without limitation to, a transmitter. In addition, the input circuit and the output circuit may be different circuits or may be a same circuit. In this case, the circuit is respectively used as the input circuit and the output circuit at different moments. Specific implementations of the processor and the various circuits are not limited in embodiments of this application.

According to a thirty-second aspect, a processing apparatus is provided, including a processor and a storage. The processor is configured to read instructions stored in the storage, and may receive a signal through a receiver, and transmit a signal through a transmitter, to perform the method in any one of the first aspect to the ninth aspect and any one of the possible implementations of the aspects.

In a possible implementation, there are one or more processors, and there are one or more storages.

In a possible implementation, the storage and the processor may be integrated, or the storage and the processor are separately disposed.

In a specific implementation process, the storage may be a non-transitory (non-transitory) memory, for example, a read-only memory (read-only memory, ROM). The storage and the processor may be integrated into a same chip, or may be respectively disposed in different chips. A type of the storage and a manner in which the storage and the processor are disposed are not limited in embodiments of this application.

It should be understood that a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by using hardware or software. When the hardware is used for implementation, the processor may be a logic circuit, an integrated circuit, or the like. When the software is used for implementation, the processor may be a general-purpose processor, and is implemented by reading software code stored in the storage. The storage may be integrated into the processor, or may be located outside the processor, and exist independently.

According to a thirty-third aspect, a computer program product is provided. The computer program product includes a computer program (which may also be referred to as code or instructions). When the computer program is run, a computer is enabled to perform the method in any one of the first aspect to the ninth aspect and any one of the possible implementations of the aspects.

According to a thirty-fourth aspect, a computer-readable medium is provided. The computer-readable medium stores a computer program (which may also be referred to as code or instructions). When the computer program is run on a computer, the computer is enabled to perform the method in any one of the first aspect to the ninth aspect and any one of the possible implementations of the aspects.

According to a thirty-fifth aspect, a communication system is provided, including at least one of the first donor node, the second donor node, the third donor node, the fourth donor node, the first IAB node, and the AMF described above.

### BRIEF DESCRIPTION OF DRAWINGS

FIG. 1 is a diagram of an architecture of an IAB system applicable to technical solutions in this application;
FIG. 2 is a diagram of composition of an IAB node;
FIG. 3 is a diagram of control plane and user plane protocol stacks in an IAB network;
FIG. 4 is a schematic flowchart of network access by an IAB node;
FIG. 5 is a diagram of a partial migration scenario of an IAB node;
FIG. 6 is a diagram of an IAB topology redundancy scenario;
FIG. 7 is a diagram of a consecutive partial migration scenario of a mobile IAB node;
FIG. 8 is a diagram of a DU migration scenario of an IAB node;
FIG. 9 is a schematic flowchart of an IAB authorization information transfer method according to this application;
FIG. 10 is a schematic flowchart of another IAB authorization information transfer method according to this application;
FIG. 11 is a schematic flowchart of still another IAB authorization information transfer method according to this application;
FIG. 12 is a schematic flowchart of still another IAB authorization information transfer method according to this application;
FIG. 13 is a schematic flowchart of still another IAB authorization information transfer method according to this application;
FIG. 14 is a schematic flowchart of still another IAB authorization information transfer method according to this application;
FIG. 15 is a schematic flowchart of still another IAB authorization information transfer method according to this application;
FIG. 16 is a schematic flowchart of still another IAB authorization information transfer method according to this application;
FIG. 17 is a block diagram of a communication apparatus according to an embodiment of this application;
FIG. 18 is a block diagram of another communication apparatus according to an embodiment of this application; and
FIG. 19 is a diagram of a chip system according to an embodiment of this application.

### DESCRIPTION OF EMBODIMENTS

The following describes technical solutions in this application with reference to accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a wireless fidelity (wireless fidelity, Wi-Fi) system, a device-to-device (device-to-device, D2D) communication system, a vehicle-to-everything (vehicle-to-everything, V2X) communication system, a universal mobile telecommunications system (Universal Mobile Telecommunications System, UMTS), a worldwide interoperability for microwave access (Worldwide Interoperability for Microwave Access, WiMAX) communication system, a machine-to-machine (machine-to-machine, M2M) communication system, a machine type communication (machine type communication, MTC) system, an internet of things (internet of things, IoT) communication system, a non-terrestrial network (non-terrestrial network, NTN) system, a 5th generation (5th Generation, 5G) mobile communication system, a new radio (New Radio, NR) system, or a future wireless communication system.

A network architecture applicable to this application is first briefly described.

In this application, a relay node supporting integrated access and backhaul is referred to as an IAB node (IAB node) to distinguish from an LTE (long term evolution, LTE) relay, and a system including the IAB node is also referred to as a relay system.

It should be understood that names of all nodes and information in this application are merely names specified for ease of description in this application, and may be different names in an actual network. It should not be understood that the names of the nodes and the information are limited in this application. On the contrary, any name that has a function that is the same as or similar to that of the node or the information used in this application is considered as a method or an equivalent replacement in this application, and falls within the protection scope of this application. Details are not described below.

To design a flexible and convenient access and backhaul solution, a wireless transmission solution is used for both an access link (access link, AL) and a backhaul link (backhaul link, BL) in an IAB scenario.

In a network including an IAB node (briefly referred to as an IAB network below), the IAB node may provide a wireless access service to a terminal device. UE is connected to the IAB node through a wireless access link, and is connected to a donor node (IAB donor/donor node) through a wireless backhaul link, to transmit service data of a user.

For example, the donor node may be a donor base station. The donor node may be briefly referred to as an IAB donor (IAB donor) or a DgNB (namely, a donor gNodeB) in a 5G network. The donor node may be a complete entity, or may be a form in which a central unit (central unit, CU) (which is briefly referred to as a donor-CU or a CU in this specification) and a distributed unit (distributed unit, DU) (which is briefly referred to as a donor-DU in this specification) are separated, in other words, the donor node includes the donor-CU and the donor-DU. In embodiments of this application and the accompanying drawings, an example in which the donor node includes the donor-CU and the donor-DU is used to describe the method provided in embodiments of this application.

The IAB node includes a mobile termination (mobile termination, MT) part and a distributed unit (distributed unit, DU) part. When facing a parent node of the IAB node, the IAB node may be considered as a terminal device. In this case, the IAB node plays a role of the MT. When facing a child node (the child node may be a terminal device or a terminal device part in another IAB node) of the IAB node, the IAB node may be considered as a communication apparatus. In this case, the IAB node plays a role of the DU. Therefore, it may be considered that the IAB node includes the MT part and the DU part. An IAB node may establish a backhaul connection to at least one parent node of the IAB node through an MT part. A DU part in an IAB node may provide an access service to a terminal device or an MT part in another IAB node.

The donor-CU may alternatively be in a form in which a user plane (User plane, UP) (which is briefly referred to as a CU-UP in this specification) and a control plane (Control plane, CP) (which is briefly referred to as a CU-CP in this specification) are separated, in other words, the donor-CU includes the CU-CP and the CU-UP.

The IAB node is connected to a core network via the donor node through a wired link. For example, in a 5G standalone architecture, the IAB node is connected to a 5G core network (5G core, 5GC) via the donor node through the wired link. In a 5G non-standalone architecture, the IAB node is connected to an evolved packet core network (evolved packet core, EPC) via an eNB on the control plane, and is connected to the EPC via the donor node and the eNB on the user plane.

To ensure service transmission reliability, the IAB network supports multi-hop IAB node and multi-connectivity IAB node networking. Therefore, there may be a plurality of transmission paths between the terminal device and the donor node. On one path, there is a determined hierarchical relationship between IAB nodes and between the IAB node and a donor node serving the IAB node. Each IAB node considers a node providing a backhaul service to the IAB node as a parent node. Correspondingly, each IAB node may be considered as a child node of the parent node of the IAB node.

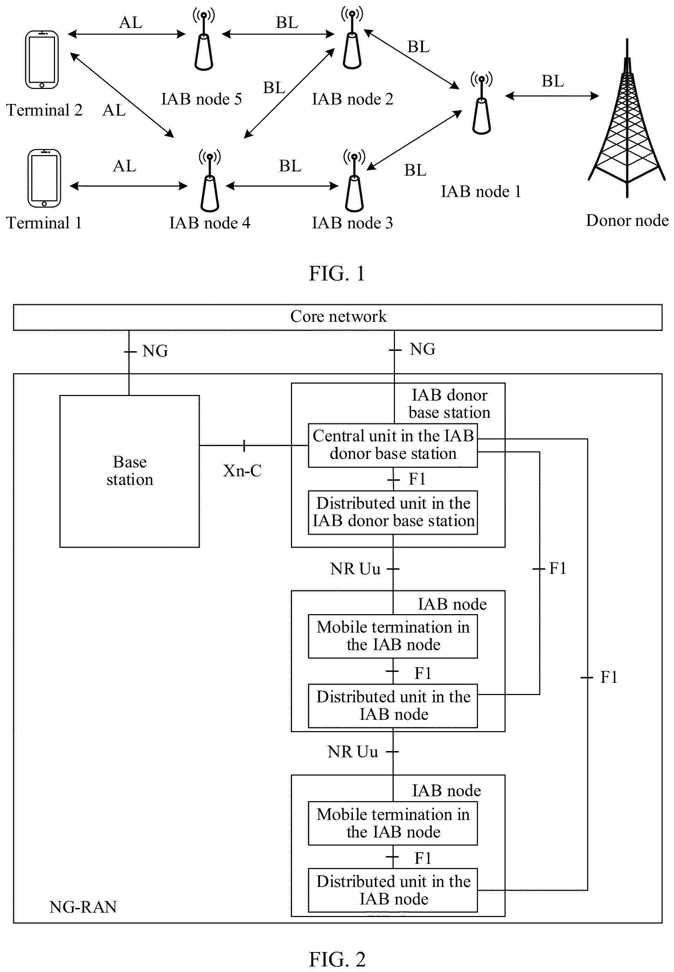

For example, with reference to FIG. 1, a parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 3. An uplink data packet of the terminal device may be transmitted to the donor node through one or more IAB nodes, and then sent by the donor node to a mobile gateway device (for example, a UPF network element in the 5G network). A downlink data packet is received by the donor node from the mobile gateway device, and then sent to the terminal device through the one or more IAB nodes. There are two available paths for data packet transmission between a terminal device 1 and the donor node: the terminal device 1→the IAB node 4→the IAB node 3→the IAB node 1→the donor node, and the terminal device 1→the IAB node 4→the IAB node 2→the IAB node 1→the donor node. There are three available paths for data packet transmission between a terminal device 2 and the donor node: the terminal device 2→the IAB node 4→the IAB node 3→the IAB node 1→the donor node, the terminal device 2→the IAB node 4→the IAB node 2→the IAB node 1→the donor node, and the terminal device 2→the IAB node 5→the IAB node 2→the IAB node 1→the donor node.

It may be understood that in the IAB network, one transmission path between the terminal device and the donor node may include one or more IAB nodes. Each IAB node needs to maintain a wireless backhaul link to the parent node and a wireless link to the child node. If an IAB node is a node accessed by the terminal device, there is a wireless access link between the IAB node and a child node (namely, the terminal device). If an IAB node is a node providing a backhaul service to another IAB node, there is a wireless backhaul link between the IAB node and a child node (namely, the another IAB node). For example, with reference to FIG. 1, on the path "the terminal device 1→the IAB node 4→the IAB node 3→the IAB node 1→the donor node", the terminal device 1 accesses the IAB node 4 through a wireless access link, the IAB node 4 accesses the IAB node 3 through a wireless backhaul link, the IAB node 3 accesses the IAB node 1 through a wireless backhaul link, and the IAB node 1 accesses the donor node through a wireless backhaul link.

For example, the IAB node may be customer premises equipment (customer premises equipment, CPE), a residential gateway (residential gateway, RG), or the like. In this case, the method provided in embodiments of this application may be further applied to a home access (home access) scenario.

The foregoing IAB networking scenario is merely an example. In an IAB scenario in which multi-hop and multi-connectivity are combined, there are more other possible IAB networking scenarios. For example, a donor node and an IAB node of another donor node form dual connectivity to serve a terminal device, and so on. The possible scenarios are not listed one by one herein.

FIG. 2 is a diagram of a system architecture applicable to an embodiment of this application. As shown in FIG. 2, an IAB (or referred to as an IAB device) is a wireless backhaul base station. A unique feature of the IAB is that the IAB first needs to establish a backhaul channel with a target macro base station before providing a wireless coverage service to the outside. This is similar to that of customer premises equipment (customer premises equipment, CPE), and a difference is that the CPE provides wireless fidelity (wireless fidelity, Wi-Fi) coverage to the outside. The IAB provides a wireless signal of a base station to the outside, for example, a 5th generation (5th generation, 5G) signal. The IAB is mainly used to extend coverage of a macro base station. With a high-power multi-antenna reception feature and the like of a backhaul apparatus, the IAB extends remote coverage of the macro base station. In this way, a weak coverage area that is originally far away from the macro base station is changed to a good coverage area near the macro base station. The IAB needs to establish a connection relationship with a fixed macro base station, and therefore usually needs to accurately access the target macro base station to establish a backhaul channel.

In the IAB network architecture shown in FIG. 2, standalone (standalone, SA) networking is used as an example. An IAB donor may include a central unit (central unit, CU) and a distributed unit (distributed unit, DU). That is, functions of the IAB donor are split, some functions are deployed on the CU, and remaining functions are deployed on the DU. A plurality of DUs share one CU. This can reduce costs and facilitate network extension. The CU is connected to the DU through an F1 interface. On behalf of the IAB donor, the CU is connected to a core network through a next generation (next generation, NG) interface. On behalf of the IAB donor, the CU is connected to another gNB through an Xn interface.

An IAB node DU (which may be briefly referred to as an IAB-DU in this application) is logically connected to an IAB donor-CU (which may be briefly referred to as a CU in this application) through an F1 interface. Actually, the IAB-DU is connected to the CU through an NR Uu interface between each hop of IAB-MT and a parent node DU. However, because the IAB-DU can finally communicate with the CU, it may be considered that there is logically an F1 interface. An IAB-MT function is defined as a component similar to UE. In an IAB network, the MT is referred to as a function residing on an IAB node. Because the MT has a function similar to that of common UE, it may be considered that the IAB node accesses a parent node or a network through the MT.

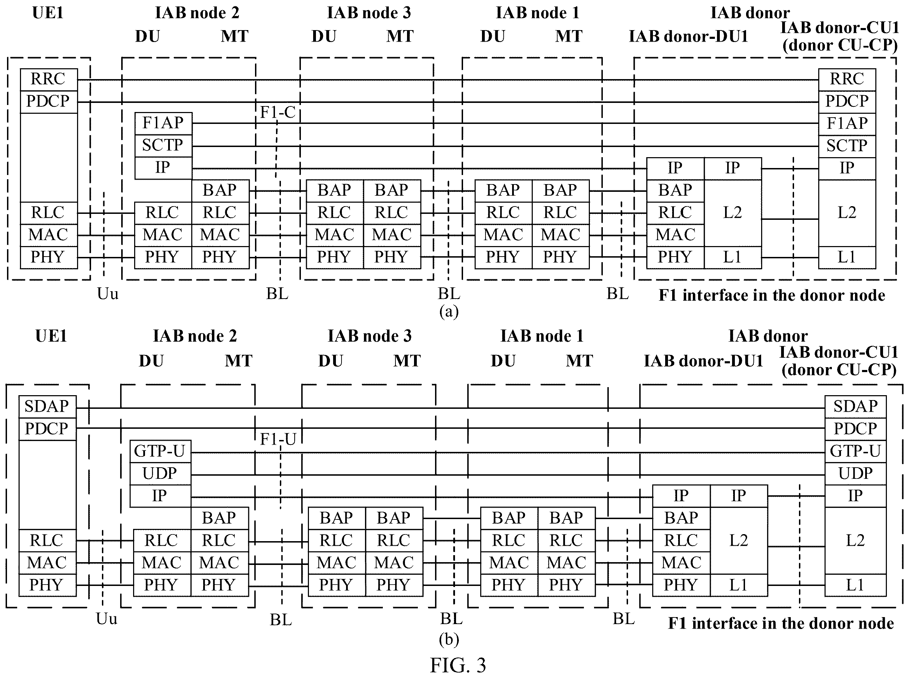

User plane and control plane protocol stacks in the IAB network are shown in FIG. 3. The F1 interface supports a user plane protocol (F1-user plane, F1-U) and a control plane protocol (F1-control plane, F1-C). As shown in (b) in FIG. 3, the user plane protocol includes one or more of the following protocol layers: a GPRS tunneling protocol user plane (General Packet Radio Service tunneling protocol user plane, GTP-U), UDP (user datagram protocol, user datagram protocol), IP (internet protocol, internet protocol), and another protocol layer. As shown in (a) in FIG. 3, the control plane protocol includes one or more of the following: F1AP (F1 application protocol, F1 application protocol), SCTP (stream control transport protocol, stream control transport protocol), IP, and another protocol layer. Through F1-C, the IAB donor and the IAB node may perform interface management, IAB-DU management, UE context-related configuration, and the like. Through F1-U, the IAB donor and the IAB node may perform functions such as user plane data transmission and downlink transmission status feedback.

It should be noted that FIG. 1 and FIG. 2 are merely examples. The technical solutions in this application may be applied to various communication systems including an access network unit. For example, the access network unit may be the IAB in FIG. 1 or the gNB shown in FIG. 2. In addition, the communication system may further include a terminal device.

The terminal device in embodiments of this application may also be referred to as a terminal, and may be a device having a wireless transceiver function. The terminal device may be deployed on land, including indoors, outdoors, handheld, or vehicle-mounted, may be deployed on water (for example, on a ship or the like), or may be deployed in the air (for example, on an airplane, a balloon, a satellite, or the like). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, a computer having a wireless transceiver function, or the like. In addition, the terminal device may be an apparatus, for example, a chip or a chip system, that can support the terminal in implementing the function. The apparatus may be installed in the terminal. In the technical solutions provided in embodiments of this application, an example in which an apparatus configured to implement a function of the terminal is a terminal is used to describe the technical solutions provided in embodiments of this application. It should be understood that the terminal is a general term, and includes a most common mobile phone, CPE, and a backhaul (integrated access and backhaul, IAB) terminal. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

The network device in embodiments of this application includes a base station (base station, BS), and may be a device that is deployed in a radio access network and that can perform wireless communication with a terminal. The base station may be in a plurality of forms, for example, a macro base station, a micro base station, a relay station, an access point, a backhaul station, or the like. For example, the base station in embodiments of this application may be a base station in 5G or a base station in LTE. The base station in 5G may also be referred to as a transmission reception point (transmission reception point, TRP) or a next generation NodeB (next generation NodeB, gNB). In embodiments of this application, an apparatus configured to implement a function of the network device may be a network device, or may be an apparatus, for example, a chip or a chip system, that can support the network device in implementing the function. The apparatus may be installed in the network device. In the technical solutions provided in embodiments of this application, an example in which the apparatus configured to implement the function of the network device is a network device and the network device is a base station is used to describe the technical solutions provided in embodiments of this application.

In embodiments of this application, the chip system may include a chip, or may include a chip and another discrete component.

It should be understood that the network architecture shown above is merely an example for description, and the network architecture applicable to embodiments of this application is not limited thereto. Any network architecture that can implement functions of the foregoing network elements is applicable to embodiments of this application.

It should be further understood that the foregoing names are merely defined for distinguishing between different functions, and should not constitute any limitation on this application. This application does not exclude a possibility of using other names in a 6G network and another future network.

It should be further understood that the names of the interfaces between the network elements in FIG. 2 are merely examples, and the interfaces may have other names in specific implementation. This is not specifically limited in this application. In addition, a name of information (or signaling) transmitted between the foregoing network elements is merely an example, and does not constitute any limitation on a function of the information.

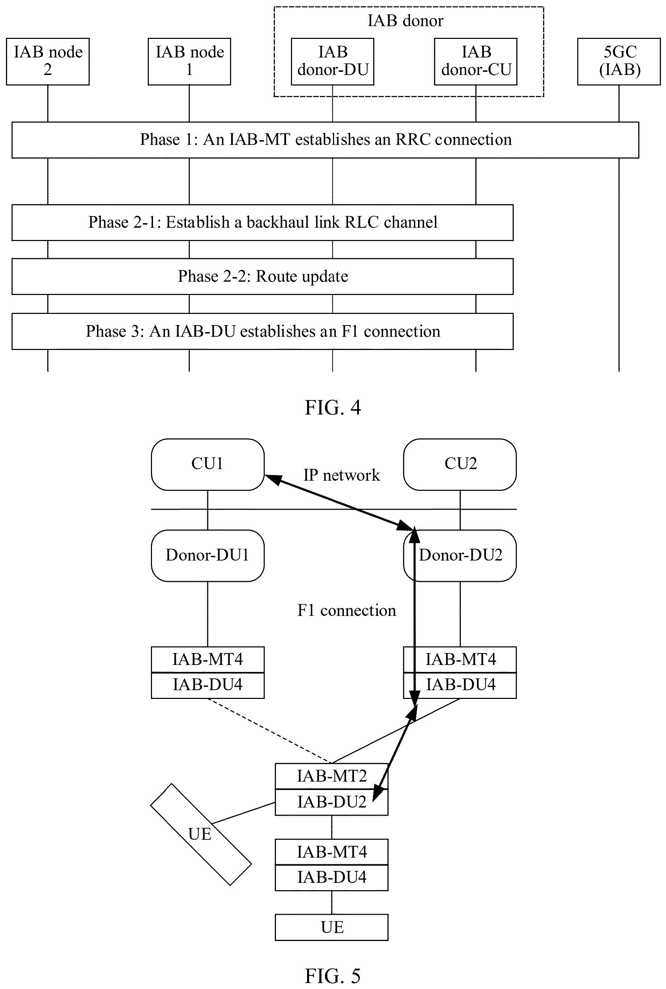

The following describes a process of accessing a network by an IAB node (IAB integration). FIG. 4 is a flowchart of accessing a network by an IAB node. A process of accessing a network by an IAB node 2 is used as an example. An IAB node 1 is a parent node of the IAB node 2 and is already in the network.

A network access procedure of the IAB node may be summarized as follows:
Phase (Phase) 1: An IAB-MT accesses a cell in a manner similar to that of common UE, establishes an RRC connection to a donor node, and when establishing the RRC connection, indicates that the IAB-MT is an IAB node (an IAB node indication (IAB node indication) is carried in RRC connection setup complete (RRC Setup Complete) information). When a CU sends initial UE information (INITIAL UE MESSAGE) to a core network (specifically, an AMF network element in the core network), the IAB node indication is also carried. The AMF performs authentication on the IAB-MT, and includes an IAB authorized information element (IAB authorized information element, namely, "IAB authorization information" in the present invention) in information indicating the CU to establish initial UE context of the IAB-MT (INITIAL CONTEXT SETUP REQUEST). If the authentication succeeds, a value of the IAB authorized information element is authorized. Otherwise, the value of the IAB authorized information element is not authorized. The network access procedure of the IAB node is described herein. Therefore, it is assumed that if the value of the IAB authorized information element is authorized, subsequent steps are performed.
Phase 2: The CU configures a backhaul link RLC channel (BH RLC Channel) for the IAB node by using an RRC message, and performs routing configuration. Specifically, in this case, only a default (default) backhaul link RLC channel and a default route are configured for use during subsequent initial establishment of an F1 interface (for details, refer to a phase 3). After the F1 interface is established, more backhaul link RLC channels and routing paths may be configured for the IAB node by using F1-C information for use by subsequent more F1-C information and F1-U user plane data. In the phase 2, in addition to configuring the IAB node 2, route update is further performed on a node (the IAB node 1) between the IAB node and the donor, to notify the node of how to select a next-hop link and a next-hop RLC channel when a data packet from the IAB node 2 or a data packet sent to the IAB node 2 is received.
Phase 3: IAB-DU2 uses a default configuration obtained in the phase 2 to send an F1 connection setup request (F1 SETUP REQUEST information, carrying configuration information of a cell of DU2) to the donor-CU, to request to establish an F1 interface. The donor-CU replies to IAB-DU2 with F1 connection setup response (F1 SETUP RESPONSE) information, activates the cell, and completes establishment of the F1 interface. Therefore, IAB-DU2 is activated, and can serve UE and a next-hop IAB-MT.

When the value of the IAB authorized information element is authorized, the donor-CU performs a subsequent procedure (including configuring a backhaul link RLC channel and the like) based on the foregoing descriptions of accessing a network by the IAB. When the value of the IAB authorized information element is not authorized, it indicates that the IAB node is not allowed to provide an IAB service, and the donor-CU may perform the following operation. For example, no default configuration is configured for the IAB-MT, or a default configuration is configured for the IAB-MT, but an F1 connection setup request initiated by the IAB-DU is rejected.

In addition to sending IAB authorization information to the CU by the AMF when the IAB node initially accesses the network, if an authorization status of the IAB subsequently changes (for example, because the IAB moves to a specific location or a service time of the IAB is specified), the AMF sends an updated IAB authorized information element value to the CU by using UE CONTEXT MODIFICATION REQUEST.

Large-scale mobility of the IAB node causes some impact on a core network side. A mobile IAB node needs a separate authorized information element, namely, a mobile (mobile) IAB authorized information element. The information element is used in a manner that is exactly the same as that of the IAB authorized information element.

It is uniformly noted herein that the IAB node in this application may be a common IAB node, or may be a mobile IAB node. Correspondingly, when the IAB node is a mobile IAB node, a mobile IAB authorized (mobile IAB Authorized) information element is used as IAB authorization information of the IAB node. This is not limited in this application.

The foregoing describes the basic concepts and the network access procedure of the IAB. The following describes some topology change-related features of the IAB. Specifically, all these features are in a case of inter-CU (inter-donor CU). For a case in which there is intra-CU (intra-donor CU) and inter-donor DU (inter-donor DU), although there is inter-donor DU, a CU performs reconfiguration because there is no inter-CU. However, the following scenarios require interaction between CUs.

### 1. Partial migration (partial migration)

Partial migration of an IAB node is shown in FIG. 5. A migrated IAB node is referred to as a boundary node (boundary node), for example, an IAB node 2. A downstream node of the boundary node is referred to as a descendant node (descendant node), for example, an IAB node 4. Before migration, there is an RRC connection between IAB-MT2 and CU1, there is an F1 interface between IAB-DU2 and CU1, and the IAB node 2 communicates with an IAB donor through a source path (through an IAB node 1 including IAB-MT1 and IAB-DU1). During partial migration, inter-CU cell handover is performed for IAB-MT2, and an RRC connection to CU2 is established.

To avoid introducing a reestablishment process of an F1 interface, during partial migration, IAB-DU2 still maintains an F1 interface with CU1, and does not establish an F1 interface with CU2. Therefore, a communication path between CU1 and IAB-DU2 changes to an inter-topology path: CU1↔donor-DU2↔IAB-MT3↔IAB-DU3↔IAB-MT2↔IAB-DU2. In FIG. 5, CU1 and CU2 are respectively referred to as an F1-terminating CU (F1-terminating CU) and a non-F1-terminating CU (non-F1-terminating CU), and may also be referred to as a source CU (source CU) and a target (target CU). It should be noted that data does not pass through CU2 during transmission on the path, and CU1 and donor-DU2 directly communicate with each other through an IP network.

The F1-terminating CU sends a transport migration management request (IAB TRANSPORT MIGRATION MANAGEMENTIAB REQUEST) message to the non-F1-terminating CU, to request to establish inter-topology traffic transmission. If the non-F1-terminating CU agrees with the establishment, the non-F1-terminating CU replies to the F1-terminating CU with a transport migration management response (IAB TRANSPORT MIGRATION MANAGEMENTIAB RESPONSE) message. If the non-F1-terminating CU disagrees with the establishment, the non-F1-terminating CU replies with a transport migration management reject (IAB TRANSPORT MIGRATION MANAGEMENTIAB REJECT) message. If the F1-terminating CU or the non-F1-terminating CU subsequently expects to perform an operation such as QoS modification or withdrawal on traffic, a transport migration modification request/response (IAB TRANSPORT MIGRATION MODIFICATIONIAB REQUEST/RESPONSE) message may be further exchanged.

### 2. Topology redundancy topology redundancy (also referred to as dual connectivity, dual connectivity)

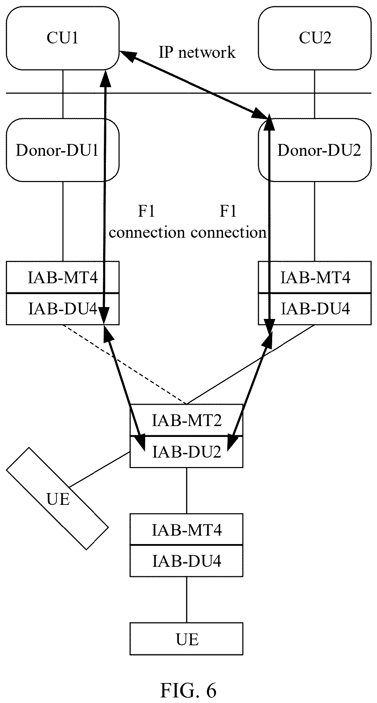

As shown in FIG. 6, in NR, UE may be dual-connected to two different base stations, to improve throughput and robustness. An IAB-MT may also be dual-connected to two different CUs, and data between an IAB-DU and the CU (specifically, an F1-terminating CU) may be simultaneously transmitted through two paths, thereby doubling throughput. There is an RRC connection between the IAB-MT and each of CU1 and CU2, and there is an F1 interface between IAB-DU2 and CU1. Data transmission through a blue path is the same as that in partial migration, and communication is also performed through an IP network between CU1 and donor-DU2, without passing through CU2.

### 3. Radio link failure recovery (Radio Link Failure recovery, RLF recovery)

When an RLF occurs between an IAB-MT and a source cell, another cell may be selected to initiate RRC reestablishment. The cell may be from another CU. After inter-CU RRC reestablishment is performed for IAB-MT2, a topology is the same as that in partial migration. An RRC connection of IAB-MT2 is changed to CU2, and an F1 interface of IAB-DU2 is still on CU1. Signaling exchange in RLF recovery and partial migration is different, but final states achieved are the same.

### 4. Consecutive partial migration (consecutive partial migration)

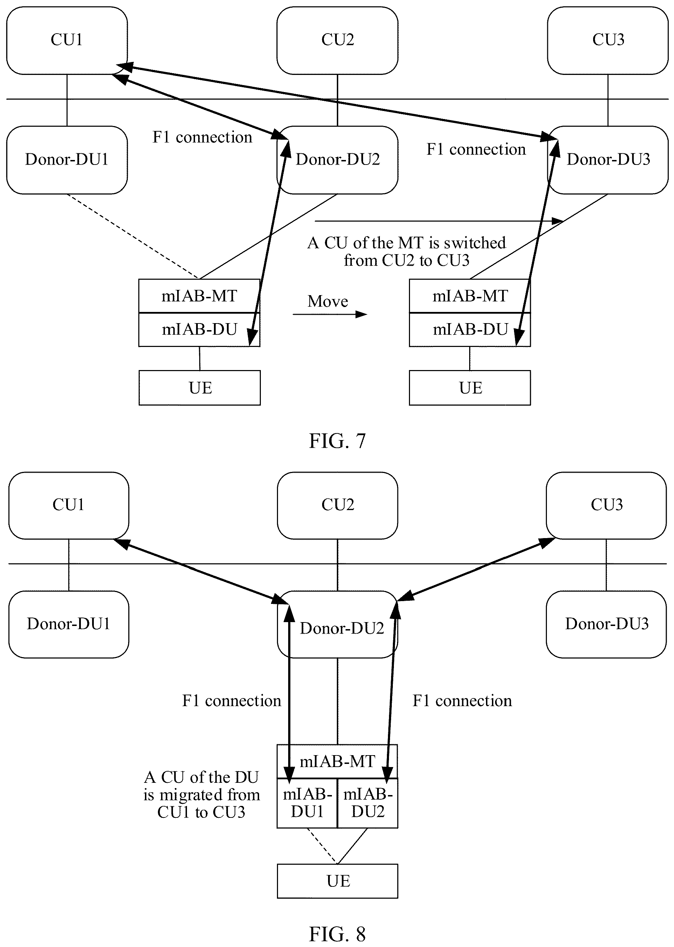

As shown in FIG. 7, an MT is handed over from CU2 to CU3, and an F1 interface of a DU is always associated with CU1. Here, mIAB is short for mobile IAB. An mIAB node in FIG. 7 is directly connected to a donor-DU, but there may be another IAB node between the mIAB node and the donor-DU. This is not limited in this application. In addition, the MT may be handed over from CU1 to CU2 (for example, FIG. 7), or may be handed over from another CU to CU2 (which may be understood with reference to the following DU migration scenario).

### 5. DU migration (DU migration)

When an mIAB node moves far away, it may be difficult for an mIAB-DU to still maintain an IP connection to an original CU, or a transmission delay is very high. Therefore, DU migration is introduced to support large-scale mobility. As shown in FIG. 8, an RRC connection of an MT is always on CU2, and an F1 interface of a DU is migrated from CU1 to CU3. The figure shows mIAB-DU1 and mIAB-DU2, which are two logical DUs on a physical DU. DU migration is implemented in the following manner: It is assumed that a source DU is mIAB-DU1. The mIAB node generates a new logical DU mIAB-DU2, and mIAB-DU2 establishes an F1 interface with CU3. CU1 sends a handover request of UE to CU3 to hand over the UE from a cell of mIAB-DU1 to a cell of mIAB-DU2. Then, CU1 releases an F1 interface with mIAB-DU1. Therefore, DU migration is completed. CU1 is a source F1-terminating CU of the IAB-DU, CU3 is a target F1-terminating CU of the IAB-DU, and CU2 is a CU of the MT (which may also be referred to as an RRC terminating CU).

It is assumed that DU migration is completely decoupled from MT migration, that is, a CU of a DU may be always different from a CU of an MT. Therefore, in consecutive partial migration, if an F1-terminating CU of the DU is always CU1, the MT is not necessarily handed over from CU1 to CU2. This is merely one of a plurality of implementations. During DU migration, the MT may be in CU2, and the DU is migrated from CU1 to CU3. Optionally, CU2 and CU1 or CU3 may be a same CU.

It is assumed that DU migration is completely decoupled from MT migration because a DU migration process is complex (two logical DUs need to be generated, and the UE needs to be handed over to the new logical DUs one by one), and it is not appropriate to frequently perform DU migration. Therefore, the CU of the DU should be a CU with a large control range. However, MT migration is MT handover, and may be frequently performed. Selection of the CU of the MT is determined based on signal quality. Therefore, the CU of the MT may be different from the CU of the DU.

### 6. Access to a different CU by an IAB (IAB integration to Different CU).

Based on the foregoing assumption that DU migration is completely decoupled from MT migration, in an IAB integration process, an RRC connection of an MT and an F1 interface of a DU may be terminated on different CUs (for example, a CU of the DU is a CU with a large control range, and a CU of the MT is a CU corresponding to a cell with best signal quality). That is, once the IAB node accesses a network, the topology in FIG. 5 is constructed.

In many scenarios (for example, an IAB node migration scenario), the CU of the IAB-MT may be different from the CU of the IAB-DU. In some implementations, the CU of the IAB-DU also needs to know the IAB authorization information of the IAB-MT. For example, when the IAB node initially accesses the network, if the CU of the IAB-MT configures a default configuration for the MT, and the IAB-DU sends an F1 interface setup request to the CU of the IAB-DU, the CU of the IAB-DU needs to know whether the IAB node is authorized or not authorized, to perform a corresponding operation (for example, when the IAB node is not authorized, the F1 interface setup request of the IAB-DU is rejected). However, in the conventional technology, how the CU of the IAB-DU learns of current IAB authorization information when the CU of the IAB-MT is different from the CU of the IAB-DU is not considered.

This application provides a plurality of communication methods. By way of example, and not limitation, when IAB authorization information is updated, latest IAB authorization information may be notified to a CU of an IAB-DU, so that the CU of the IAB-DU can determine, based on the authorization information, whether to delete an F1 interface/whether to allow establishment of an F1 interface/whether to switch off a cell of the IAB-DU/whether to configure a cell of the IAB-DU to forbid UE access/the like. This helps a network side flexibly control an IAB node, and meets a requirement of allowing or forbidding working of the IAB node within a specific time/space range.

It should be understood that when ordinal numbers such as "first", "second", "third", "fourth", and "fifth" are mentioned in the present invention, unless the ordinal numbers definitely indicate an order based on the context, it should be understood that the ordinal numbers are merely used for differentiation.

A method for notifying the latest IAB authorization information to the CU of the IAB-DU varies with a specific scenario. It should be understood that descriptions of specific scenarios in embodiments of this application are merely examples. In addition to the foregoing described application scenarios, the method provided in embodiments of this application is also applicable to an application scenario in which a similar problem exists.

The following describes in detail several methods for notifying the latest IAB authorization information to the CU of the IAB-DU. In scenarios to which the following methods are applicable, a CU of an IAB-MT is different from a CU of an IAB-DU.

### Method 1

The following uses a consecutive partial migration scenario shown in FIG. 7 as an example. In FIG. 7, CU1 is an F1-terminating CU of a DU, CU2 is a source CU of an MT, and CU3 is a target CU of the MT. In the method 1, the target CU of the MT first notifies the source CU of the MT, and then the source CU of the MT notifies the F1-terminating CU of the DU. The method 1 is applicable to a scenario of consecutive partial migration.

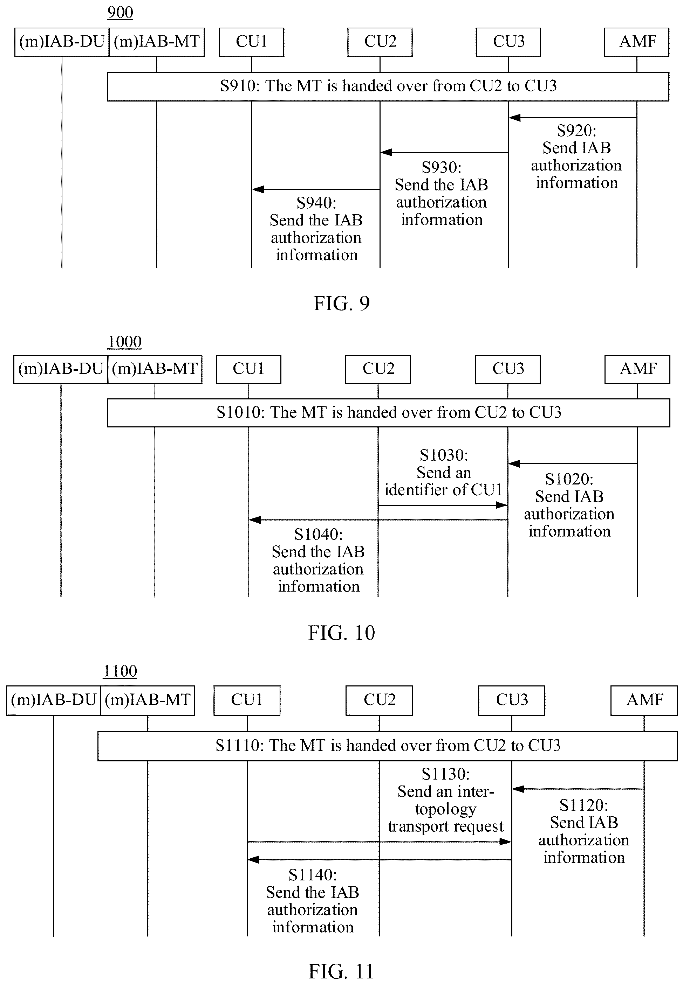

FIG. 9 is a schematic flowchart 900 of the method 1. The method in FIG. 9 includes at least a part of the following content.

S910: The MT is handed over from CU2 to CU3.

Specifically, before migration, there is an RRC connection between the IAB-MT and CU2, and there is an F1 interface between the IAB-DU and CU1. During partial migration, inter-CU cell handover is performed for the IAB-MT, and an RRC connection to CU3 is established. However, the IAB-DU still maintains the F1 interface with CU1, and does not establish an F1 interface with CU3.

S920: An AMF sends IAB authorization information to CU3.

In a possible implementation, before the AMF sends the IAB authorization information to CU3, CU3 first sends path switch request information to the AMF, to notify the AMF that the MT has been handed over to CU3, and the AMF transfers a service of the MT to CU3. The AMF replies to CU3 with path switch request acknowledgment (PATH SWITCH REQUEST ACK) information that carries a current value of an IAB authorized information element and/or a current value of a mobile IAB authorized information element (namely, the IAB authorization information).

In another possible implementation, when the AMF finds that the IAB authorization information changes, a current value of an IAB authorized information element and/or a current value of a mobile IAB authorized information element (namely, the IAB authorization information) are/is carried in a UE context modification request (UE CONTEXT MODIFICATION REQUEST).

S930: CU3 sends the IAB authorization information to CU2.

Specifically, CU3 sends, to CU2, a message that carries authorization information of a (mobile) IAB.

In a possible implementation, indication information sent by CU3 to CU2 directly carries the (mobile) IAB authorized information element, and a value of the (mobile) IAB authorized information element includes authorized or not authorized.

In another possible implementation, only when authorization is not granted, the information carries the (mobile) IAB authorized information element. In this case, a value of the information element is not authorized. Alternatively, the indication information carries indication information for releasing an F1 connection or not establishing an F1 connection.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

In subsequent steps and embodiments, unless otherwise specified, an indication manner of the IAB authorization information may be the same as that in this step.

S940: CU2 sends the IAB authorization information to CU1.

Specifically, CU2 sends, to CU1, a message that carries the indication information sent by CU3.

In a possible implementation, the message may be an IAB transport migration modification request message IAB TRANSPORT MIGRATION MODIFICATION REQUEST.

In another possible implementation, the indication information may carry at least one of an identifier (for example, a gNB ID and/or an IP address) of CU3 and an identifier (for example, the UE XnAP ID) of the MT in CU3.

Optionally, the IAB authorization information further needs to carry an IAB node-related identifier, to indicate an IAB node related to the authorization information.

### Method 2

The following uses a consecutive partial migration scenario shown in FIG. 7 as an example to describe the method 2. In FIG. 7, CU1 is an F1-terminating CU of a DU, CU2 is a source CU of an MT, and CU3 is a target CU of the MT. In the method 2, the target CU of the MT directly notifies the F1-terminating CU of the DU. The method 2 is applicable to scenarios of partial migration, consecutive partial migration, radio link failure recovery, and topology redundancy.

FIG. 10 is a schematic flowchart 1000 of the method 2. The method in FIG. 10 includes at least a part of the following content.

S1010: The MT is handed over from CU2 to CU3.

Specifically, before migration, there is an RRC connection between the IAB-MT and CU2, and there is an F1 interface between the IAB-DU and CU1. During partial migration, inter-CU cell handover is performed for the IAB-MT, and an RRC connection to CU3 is established. However, the IAB-DU still maintains the F1 interface with CU1, and does not establish an F1 interface with CU3.

S1020: An AMF sends IAB authorization information to CU3.

In a possible implementation, before the AMF sends the IAB authorization information to CU3, CU3 first sends path switch request information to the AMF, to notify the AMF that the MT has been handed over to CU3, and the AMF transfers a service of the MT to CU3. The AMF replies to CU3 with a path switch request acknowledgment message that carries a current value of an IAB authorized information element and/or a current value of a mobile (mobile) IAB authorized information element (namely, the IAB authorization information).

In another possible implementation, when the AMF finds that the IAB authorization information changes, a current value of an IAB authorized information element and/or a current value of a mobile IAB authorized information element (namely, the IAB authorization information) are/is carried in a UE context modification request message (UE CONTEXT MODIFICATION REQUEST).

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

S1030: CU2 sends an identifier of CU1 to CU3.

Specifically, CU2 sends identification information to CU3, to enable CU3 to know that a current F1-terminating CU is CU1.

S1040: CU3 sends the IAB authorization information to CU1.

Specifically, CU3 sends, to CU1, a message that carries authorization information of a (mobile) IAB node.

In a possible implementation, indication information sent by CU3 to CU1 directly carries the (mobile) IAB authorized information element, including a value of authorized or not authorized.

In another possible implementation, only when authorization is not granted, the information carries the (mobile) IAB authorized information element with a value of not authorized. Alternatively, the indication information carries indication information for releasing an F1 connection or not establishing an F1 connection.

Optionally, the IAB authorization information further needs to carry an IAB node-related identifier, to indicate an IAB node related to the authorization information.

It should be understood that in addition to the consecutive partial migration scenario shown in FIG. 7, the method 2 may be further applied to scenarios of inter-CU partial migration (inter-CU partial migration), inter-CU radio link failure recovery (inter-CU RLF recovery), and inter-CU topology redundancy (inter-CU topology redundancy) in which a master node (Master Node, MN) of the IAB-MT is non-F1-terminating (CU3). It is assumed that there is no CU2. In these scenarios, there are only two CUs: CU1 and CU3, and the IAB-MT is migrated from CU1 to CU3. CU1 is not only a source CU of the IAB-MT, but also an F1-terminating CU of the IAB-DU.

In different scenarios, some steps in steps S1010 to S1040 in the method 2 are different.

For the partial migration or RLF recovery scenario, there is a different MT migration behavior in step S1010. In the partial migration scenario, the MT is handed over from CU1 to CU3. In the RLF recovery scenario, the MT experiences a radio link failure in CU1. Therefore, the MT performs radio link failure recovery from CU1 to CU3 (MT performs RLF recovery from CU1 to CU3). Step S1030 is deleted, and other steps remain unchanged.

For the topology redundancy scenario, the MN of the IAB-MT is limited to CU3 (an SN is CU1) because in dual connectivity, an RRC connection of the IAB-MT is anchored on the MN. Although there is an RRC connection between the SN and the IAB-MT, the SN is used to forward an RRC message between the MN and the IAB-MT. The AMF sends authorization information of the IAB-MT to the MN. Only when the MN is CU3, CU3 needs to further notify the F1-terminating CU (namely, CU1) of the authorization information. If the MN is originally CU1, and CU1 is the F1-terminating CU, there is no technical problem.

For the topology redundancy scenario, step S1010 should be deleted. Both the MN and the SN can learn, based on an MN indication, an OAM indication, and the like, which CU is the F1-terminating CU. In step S1020, the MN obtains latest authorization information of the MT. Because no MT handover or RLF recovery occurs, there is no path switch procedure interaction between the CU and the AMF. Therefore, the authorization information is obtained only by using a UE context modification request herein.

In addition, for the topology redundancy scenario, this is further applicable to an IAB-MT EN-DC scenario. That is, the master node of the MT is an MeNB (LTE base station), the secondary node is an SgNB (NR base station), and the secondary node is an F1-terminating donor (F1-terminating donor), in other words, CU1 is changed to the MeNB, CU3 is changed to the SgNB, and the AMF is changed to an MME.

### Method 3

The following uses a consecutive partial migration scenario shown in FIG. 7 as an example to describe the method 3. In FIG. 7, CU1 is an F1-terminating CU of a DU, CU2 is a source CU of an MT, and CU3 is a target CU of the MT. In the method 3, the F1-terminating CU of the DU initiates an inter-topology traffic migration procedure to the target CU of the MT, and the target CU of the MT notifies IAB authorization information in reply information. The method 3 is applicable to scenarios of partial migration, consecutive partial migration, radio link failure recovery, and topology redundancy.

FIG. 11 is a schematic flowchart 1100 of the method 3. The method in FIG. 11 includes at least a part of the following content.

S1110: The MT is handed over from CU2 to CU3.

Specifically, before migration, there is an RRC connection between the IAB-MT and CU2, and there is an F1 interface between the IAB-DU and CU1. During partial migration, inter-CU cell handover is performed for the IAB-MT, and an RRC connection to CU3 is established. However, the IAB-DU still maintains the F1 interface with CU1, and does not establish an F1 interface with CU3.

S1120: An AMF sends IAB authorization information to CU3.

In a possible implementation, before the AMF sends the IAB authorization information to CU3, CU3 first sends path switch request information to the AMF, to notify the AMF that the MT has been handed over to CU3, and the AMF transfers a service of the MT to CU3. The AMF replies to CU3 with path switch request acknowledgment information that carries a current value of an IAB authorized information element and/or a current value of a mobile IAB authorized information element (namely, the IAB authorization information).

In another possible implementation, when the AMF finds that the IAB authorization information changes, a current value of an IAB authorized information element and/or a current value of a mobile IAB authorized information element (namely, the IAB authorization information) are/is carried in a UE context modification request.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

S1130: CU1 sends an inter-topology transport request to CU3.

CU1, serving as the F1-terminating CU, sends an IAB transport migration management request message to CU3, to request CU3 to help CU1 establish inter-topology traffic.

S1140: CU3 sends the IAB authorization information to CU1.

Specifically, CU3 includes authorization information of a (mobile) IAB in an IAB transport migration management response or IAB transport migration management reject message with which a reply to CU1 is made.

In a possible implementation, information sent by CU3 to CU1 directly carries the (mobile) IAB authorized information element, and a value of the information element includes authorized or not authorized.

In another possible implementation, only when authorization is not granted, the information carries the (mobile) IAB authorized information element with a value of not authorized. Alternatively, the information carries indication information for releasing an F1 connection or not establishing an F1 connection.

In another implementation, when authorization is granted, a reply is made with the IAB transport migration management response message; or when authorization is not granted, a reply is made with the IAB transport migration management reject message.

In another implementation, when authorization is not granted, a cause (Cause) value carried in the sent IAB transport migration management reject message is indication information about not authorizing the IAB.

Optionally, the IAB authorization information further needs to carry an IAB node-related identifier, to indicate an IAB node related to the authorization information.

It should be understood that in addition to the consecutive partial migration scenario shown in FIG. 7, the method 3 may be further applied to scenarios of inter-CU partial migration (inter-CU partial migration), inter-CU radio link failure recovery (inter-CU RLF recovery), and inter-CU topology redundancy (inter-CU topology redundancy) in which a master node (Master Node, MN) of the IAB-MT is non-F1-terminating (CU3). It is assumed that there is no CU2. In these scenarios, there are only two CUs: CU1 and CU3, and the IAB-MT is migrated from CU1 to CU3. CU1 is not only a source CU of the IAB-MT, but also an F1-terminating CU of the IAB-DU.

In different scenarios, some steps in steps S1110 to S1140 in the method 3 are different.

For the partial migration or RLF recovery scenario, there is a different MT migration behavior in step S1110. In the partial migration scenario, the MT is handed over from CU1 to CU3. In the RLF recovery scenario, the MT experiences a radio link failure in CU1. Therefore, the MT performs radio link failure recovery from CU1 to CU3 (MT performs RLF recovery from CU1 to CU3).

For the topology redundancy scenario, the MN of the IAB-MT is limited to CU3 (an SN is CU1) because in dual connectivity, an RRC connection of the IAB-MT is anchored on the MN. Although there is an RRC connection between the SN and the IAB-MT, the SN is used to forward an RRC message between the MN and the IAB-MT. The AMF sends authorization information of the IAB-MT to the MN. Only when the MN is CU3, CU3 needs to further notify the F1-terminating CU (namely, CU1) of the authorization information. If the MN is originally CU1, and CU1 is the F1-terminating CU, there is no technical problem.

For the topology redundancy scenario, step S1110 should be deleted. Both the MN and the SN can learn, based on an MN indication, an OAM indication, and the like, which CU is the F1-terminating CU. In step S1120, the MN obtains latest authorization information of the MT. Because no MT handover or RLF recovery occurs, there is no path switch procedure interaction between the CU and the AMF. Therefore, the authorization information is obtained only by using a UE context modification request herein.

In addition, for the topology redundancy scenario, this is further applicable to an IAB-MT EN-DC scenario. That is, the master node of the MT is an MeNB (LTE base station), the secondary node is an SgNB (NR base station), and the secondary node is an F1-terminating donor (F1-terminating donor), in other words, CU1 is changed to the MeNB, CU3 is changed to the SgNB, and the AMF is changed to an MME.

### Method 4

The following uses a consecutive partial migration scenario shown in FIG. 7 as an example to describe the method 4. In FIG. 7, CU1 is an F1-terminating CU of a DU, CU2 is a source CU of an MT, and CU3 is a target CU of the MT. In the method 4, the IAB-DU notifies the F1-terminating CU of current IAB authorization information. The method 4 is applicable to scenarios of partial migration, consecutive partial migration, radio link failure recovery, and topology redundancy.

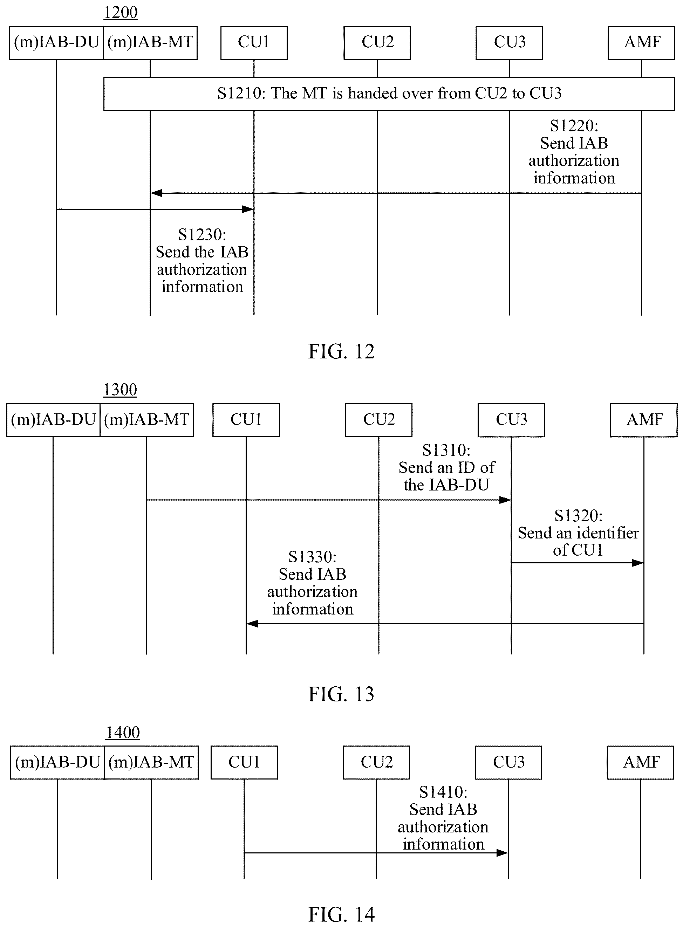

FIG. 12 is a schematic flowchart 1200 of the method 4. The method in FIG. 12 includes at least a part of the following content.

S1210: The MT is handed over from CU2 to CU3.

Specifically, before migration, there is an RRC connection between the IAB-MT and CU2, and there is an F1 interface between the IAB-DU and CU1. During partial migration, inter-CU cell handover is performed for the IAB-MT, and an RRC connection to CU3 is established. However, the IAB-DU still maintains the F1 interface with CU1, and does not establish an F1 interface with CU3.

S1220: An AMF sends IAB authorization information to the IAB-MT.

Specifically, the AMF sends, to the IAB-MT, a message that carries authorization information of a (mobile) IAB.

In a possible implementation, indication information sent by the AMF to the IAB-MT directly carries a (mobile) IAB authorized information element, and a value of the information element includes authorized or not authorized.

In another possible implementation, only when authorization is not granted, the information carries a (mobile) IAB authorized information element with a value of not authorized. Alternatively, the indication information carries indication information for releasing an F1 connection or not establishing an F1 connection.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

After the IAB-MT receives the IAB authorization information, the IAB-MT notifies the IAB-DU of the authorization information through an internal interface.

S1230: The IAB-DU sends the IAB authorization information to CU1.

In a possible implementation, the IAB-DU sends, to CU1, F1AP information (for example, GNB-DU CONFIGURATION UPDATE) that carries the authorization information of the (mobile) IAB.

Optionally, the IAB authorization information further needs to carry an IAB node-related identifier, to indicate an IAB node related to the authorization information.

For the foregoing methods 1, 2, and 4, if the step of converting the CU of the MT is deleted, the methods are applicable to a scenario in which a change in an IAB authorization status does not occur when the CU of the MT is switched. In other words, whenever the CU of the MT or the MT receives the IAB authorization status, the CU of the MT or the MT notifies the CU of the DU.

In addition, the foregoing methods 1 and 2 are further applicable to a scenario in which the MT and the DU are connected to two different CUs when the IAB initially accesses the network. In this scenario, an F1 interface is not established, and the CU of the DU cannot be notified by using an F1 message.

It should be understood that in addition to the consecutive partial migration scenario shown in FIG. 7, the method 4 may be further applied to scenarios of inter-CU partial migration (inter-CU partial migration), inter-CU radio link failure recovery (inter-CU RLF recovery), and inter-CU topology redundancy (inter-CU topology redundancy) in which a master node (Master Node, MN) of the IAB-MT is non-F1-terminating (CU3). It is assumed that there is no CU2. In these scenarios, there are only two CUs: CU1 and CU3, and the IAB-MT is migrated from CU1 to CU3. CU1 is not only a source CU of the IAB-MT, but also an F1-terminating CU of the IAB-DU.

For the partial migration or RLF recovery scenario, there is a different MT migration behavior in step S1210. In the partial migration scenario, the MT is handed over from CU1 to CU3. In the RLF recovery scenario, the MT experiences a radio link failure in CU1. Therefore, the MT performs radio link failure recovery from CU1 to CU3 (MT performs RLF recovery from CU1 to CU3).

For the topology redundancy scenario, the MN of the IAB-MT is limited to CU3 (an SN is CU1) because in dual connectivity, an RRC connection of the IAB-MT is anchored on the MN. Although there is an RRC connection between the SN and the IAB-MT, the SN is used to forward an RRC message between the MN and the IAB-MT. The AMF sends authorization information of the IAB-MT to the MN. Only when the MN is CU3, CU3 needs to further notify the F1-terminating CU (namely, CU1) of the authorization information. If the MN is originally CU1, and CU1 is the F1-terminating CU, there is no technical problem.

### Method 5

In the method 5, a CU of an MT notifies a CU of a DU (for example, CU1 in FIG. 7) to an AMF, so that the AMF directly notifies the CU of the DU each time an IAB authorization status is updated.

FIG. 13 is a schematic flowchart 1300 of the method 5. The method in FIG. 13 includes at least a part of the following content.

S1310: Optionally, the IAM-MT sends a gNB-DU ID of the IAB-DU to CU3, to notify CU1 of a DU whose F1 interface establishment is to be rejected.

S1320: CU3 sends an identifier of CU1 to the AMF. The identifier of CU1 includes a gNB ID and/or an IP address of CU1. Optionally, CU3 further sends a UE NGAP ID of the IAB-MT and/or the gNB-DU ID of the IAB-DU to the AMF, to identify the IAB node.

S1330: The AMF sends IAB authorization information to CU1.

In a possible implementation, the AMF further sends the gNB-DU ID of the IAB-DU and/or the UE NGAP ID of the IAB-MT to CU1.

According to the foregoing methods 1 to 5, signaling exchange between CUs and signaling exchange between the CU and the IAB node are introduced, so that when the CU of the IAB-MT is different from the CU of the IAB-DU, the CU of the DU can obtain current authorization information (which may also be referred to as current authorization information of the IAB node) of the IAB-MT through signaling exchange.

The foregoing methods describe how to perform communication when the CU of the IAB-MT is different from the CU of the IAB-DU in scenarios of partial migration, consecutive partial migration, radio link failure recovery, and topology redundancy.

In a DU migration scenario, the CU of the IAB-MT may be different from the CU of the IAB-DU. The following uses DU migration shown in FIG. 8 as an example to describe several communication methods 6, 7, and 8 in this scenario.

### Method 6

The following uses a DU migration scenario shown in FIG. 8 as an example to describe the method 6. In FIG. 8, CU1 is a source F1-terminating CU, CU2 is a CU of an MT, and CU3 is a target F1-terminating CU. In the method 6, the source F1-terminating CU notifies the target F1-terminating CU of current IAB authorization information.

FIG. 14 is a schematic flowchart 1400 of the method 6. The method in FIG. 14 includes at least a part of the following content.

S1410: CU1 sends IAB authorization information to CU3.

Specifically, CU1 sends, to CU3, a message that carries authorization information of an IAB and/or authorization information of a mobile IAB.

In a possible implementation, indication information sent by CU1 to CU3 directly carries a (mobile) IAB authorized information element, including a value of authorized or not authorized.

In another possible implementation, only when authorization is not granted, the information carries a (mobile) IAB authorized information element with a value of not authorized. Alternatively, the indication information carries indication information for releasing an F1 connection or not establishing an F1 connection.

In a possible implementation, the message may be a message used by CU1 to request to migrate an IAB-DU to CU3. For example, a message name may be a DU migration request (DU MIGRATION REQUEST) message.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

### Method 7

The following uses a DU migration scenario shown in FIG. 8 as an example to describe the method 7. In FIG. 8, CU1 is a source F1-terminating CU, CU2 is a CU of an MT, and CU3 is a target F1-terminating CU. In the method, an IAB-DU notifies the target F1-terminating CU of current IAB authorization information.

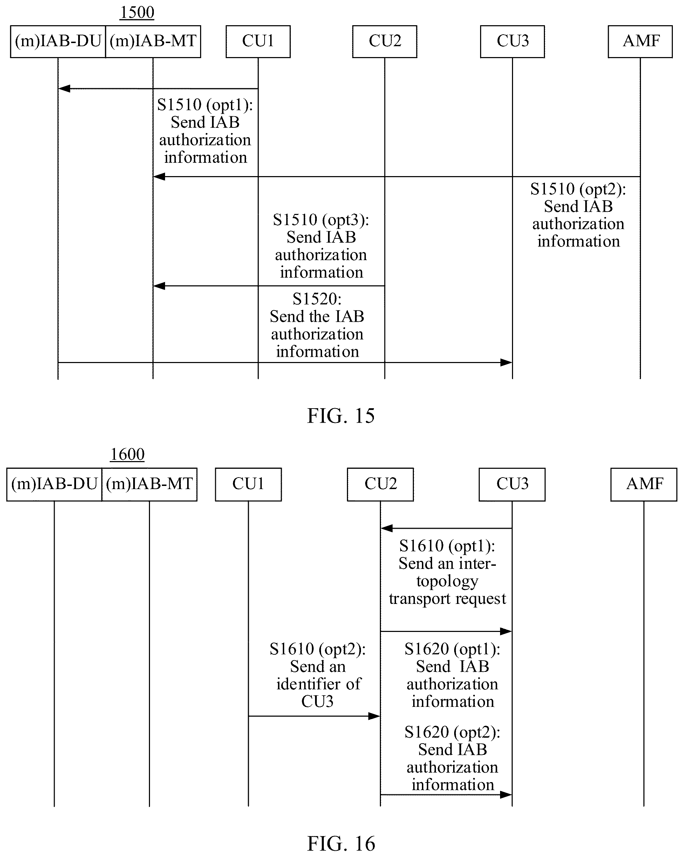

FIG. 15 is a schematic flowchart 1500 of the method 7. The method in FIG. 15 includes at least a part of the following content.

S1510: The IAB-DU obtains IAB authorization information.

In this step, the IAB-DU may obtain the IAB authorization information from different network elements.

For example, CU1 sends an F1 message to the IAB-DU (a logical DU associated with CU1, IAB-DU1 in FIG. 8), to trigger DU migration. The F1 message carries the IAB authorization information.

In a possible implementation, the IAB authorization information further carries an identifier (a gNB ID and/or an IP address) of CU3.

For another example, an AMF/CU2 sends an RRC message to the IAB-MT, where the RRC message carries the (mobile) IAB authorization information, and the IAB-MT notifies the IAB-DU of the authorization information through an internal interface.

In a possible implementation, the F1 message sent by CU1 to the IAB-DU or the RRC message sent by the AMF/CU2 to the IAB-MT directly carries a (mobile) IAB authorized information element, including a value of authorized or not authorized.

In another possible implementation, only when authorization is not granted, the F1 message or the RRC message carries a (mobile) IAB authorized information element with a value of not authorized. Alternatively, indication information for releasing an F1 connection or not establishing an F1 connection is carried.

S1520: The IAB-DU (a logical DU associated with CU3, IAB-DU2 in FIG. 8) sends the IAB authorization information to CU3.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

### Method 8

The following uses a DU migration scenario shown in FIG. 8 as an example to describe the method 8. In FIG. 8, CU1 is a source F1-terminating CU, CU2 is a CU of an MT, and CU3 is a target F1-terminating CU. In the method, the CU of the MT notifies the target F1-terminating CU of current IAB authorization information.

FIG. 16 is a schematic flowchart 1600 of the method 8. The method in FIG. 16 includes at least a part of the following content.

A possible implementation is as follows:
S1610: CU3 sends an inter-topology transport request message, namely, an IAB transport migration management request, to CU2, to request to establish F1 interface data transmission that passes through a CU2 topology and is terminated on CU3.
S1620: CU2 includes authorization information of a (mobile) IAB in an IAB transport migration management response or IAB transport migration management reject message with which a reply to CU3 is made.

Specifically, CU2 includes the authorization information of the (mobile) IAB in the IAB transport migration management response or IAB transport migration management reject message with which a reply to CU3 is made.

Optionally, information sent by CU3 to CU1 directly carries a (mobile) IAB authorized information element, including a value of authorized or not authorized.

Optionally, only when authorization is not granted, the information carries a (mobile) IAB authorized information element with a value of not authorized. Alternatively, the information carries indication information for releasing an F1 connection or not establishing an F1 connection.

Optionally, when authorization is granted, a reply is made with the IAB transport migration management response message; or when authorization is not granted, a reply is made with the IAB transport migration management reject message.

Optionally, when authorization is not granted, a cause (Cause) value carried in the sent IAB transport migration management reject message is indication information about not authorizing the IAB.

Another possible implementation is as follows:
S1610: CU1 sends an identifier (a gNB ID and/or an IP address) of CU3 to CU2, to notify CU2 that a DU is to be migrated to CU3 or to request CU2 to configure a resource for F1 interface transmission of CU3.
S1620: CU2 sends IAB authorization information to CU3.

Specifically, CU2 sends, to CU3, a message that carries authorization information of a (mobile) IAB.

Optionally, indication information sent by CU3 to CU2 directly carries a (mobile) IAB authorized information element, including a value of authorized or not authorized.

Optionally, only when authorization is not granted, the indication information carries a (mobile) IAB authorized information element with a value of not authorized. Alternatively, the indication information carries indication information for releasing an F1 connection or not establishing an F1 connection.

Optionally, the IAB authorization information further needs to carry an IAB node-related identifier, to indicate an IAB node related to the authorization information. The IAB node-related identifier includes at least one of the following: a gNB-DU ID of the IAB-DU, a UE XnAP ID of the IAB-MT in CU1, a UE XnAP ID of the IAB-MT in CU2, and a UE XnAP ID of the IAB-MT in CU3.

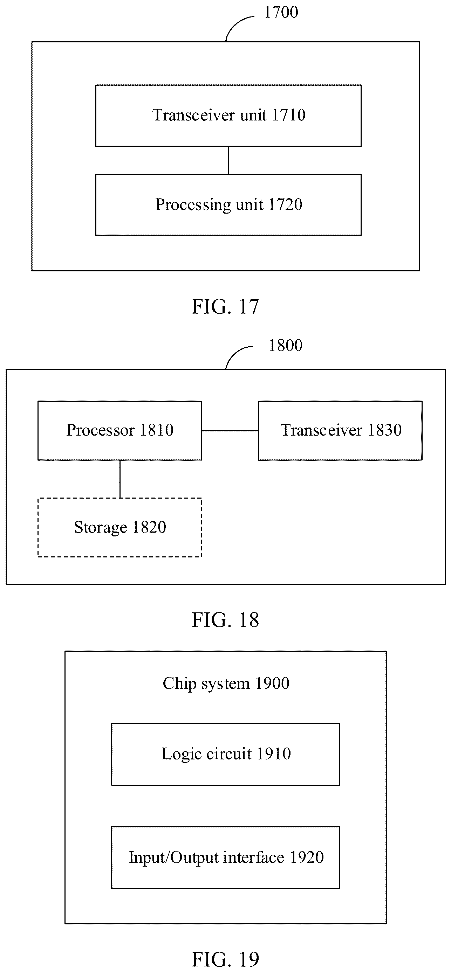

FIG. 17 is a block diagram of a communication apparatus 1700 according to an embodiment of this application. The apparatus 1700 includes a transceiver unit 1710 and a processing unit 1720. The transceiver unit 1710 may communicate with the outside, and the processing unit 1720 is configured to process data. The transceiver unit 1710 may also be referred to as a communication interface or a communication unit.

In a possible implementation, the apparatus 1700 may further include a storage unit. The storage unit may be configured to store instructions and/or data. The processing unit 1720 may read the instructions and/or the data in the storage unit.

The apparatus 1700 may be configured to perform an action performed by the donor node in the foregoing method embodiments. In this case, the apparatus 1700 may be the first donor node, the second donor node, the third donor node, or the fourth donor node, or a component that can be configured in the first donor node, the second donor node, the third donor node, or the fourth donor node. The transceiver unit 1710 is configured to perform a receiving/sending-related operation of the first donor node, the second donor node, the third donor node, or the fourth donor node in the foregoing method embodiments. The processing unit 1720 is configured to perform a processing-related operation of the first donor node, the second donor node, the third donor node, or the fourth donor node in the foregoing method embodiments.

Alternatively, the apparatus 1700 may be configured to perform an action performed by the IAB node in the foregoing method embodiments. In this case, the apparatus 1700 may be the IAB node or a component that can be configured in the IAB node. The transceiver unit 1710 is configured to perform a receiving/sending-related operation on an IAB node side in the foregoing method embodiments. The processing unit 1720 is configured to perform a processing-related operation on the IAB node side in the foregoing method embodiments.

Alternatively, the apparatus 1700 may be configured to perform an action performed by the AMF in the foregoing method embodiments. In this case, the apparatus 1700 may be the AMF or a component that can be configured in the AMF. The transceiver unit 1710 is configured to perform a receiving/sending-related operation on an AMF side in the foregoing method embodiments. The processing unit 1720 is configured to perform a processing-related operation on the AMF side in the foregoing method embodiments.

It should be further understood that the apparatus 1700 herein is embodied in a form of a functional unit. The term "unit" herein may be an application-specific integrated circuit (application-specific integrated circuit, ASIC), an electronic circuit, a processor (for example, a shared processor, a dedicated processor, a group processor, or the like) configured to execute one or more software or firmware programs, a storage, a combinational logic circuit, and/or another appropriate component that supports the described function. In an optional example, a person skilled in the art may understand that the apparatus 1700 may be specifically the first donor node, the second donor node, the third donor node, the fourth donor node, the IAB node, or the AMF in the foregoing embodiments, and may be configured to perform procedures and/or steps corresponding to the first donor node, the second donor node, the third donor node, the fourth donor node, the IAB node, or the AMF in the foregoing method embodiments. Alternatively, the apparatus 1700 may be specifically the first donor node, the second donor node, the third donor node, the fourth donor node, the IAB node, or the AMF in the foregoing embodiments, and may be configured to perform procedures and/or steps corresponding to the first donor node, the second donor node, the third donor node, the fourth donor node, the IAB node, or the AMF in the foregoing method embodiments. To avoid repetition, details are not described herein.

The apparatus 1700 in the foregoing solutions has a function of implementing corresponding steps performed by the first donor node, the second donor node, the third donor node, the fourth donor node, the IAB node, or the AMF in the foregoing methods. The function may be implemented by hardware, or may be implemented by hardware by executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform a receiving/sending operation and a related processing operation in the method embodiments.

In addition, the transceiver unit 1710 may alternatively be a transceiver circuit (for example, may include a receiver circuit and a transmitter circuit), and the processing unit may be a processing circuit.

It should be noted that the apparatus in FIG. 17 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 18, an embodiment of this application further provides a communication apparatus 1800. The communication apparatus 1800 includes a processor 1810. The processor 1810 is coupled to a storage 1820. The storage 1820 is configured to store a computer program or instructions and/or data. The processor 1810 is configured to execute the computer program or the instructions and/or the data stored in the storage 1820, to perform the methods in the foregoing method embodiments.

In a possible implementation, the communication apparatus 1800 includes one or more processors 1810.

In a possible implementation, as shown in FIG. 18, the communication apparatus 1800 may further include the storage 1820.

In a possible implementation, the communication apparatus 1800 includes one or more storages 1820.

In a possible implementation, the storage 1820 and the processor 1810 may be integrated together, or may be disposed separately, or the storage 1820 may be located outside the communication apparatus 1800.

In a possible implementation, as shown in FIG. 18, the wireless communication apparatus 1800 may further include a transceiver 1830. The transceiver 1830 is configured to receive and/or send a signal. For example, the processor 1810 is configured to control the transceiver 1830 to receive and/or send a signal.

In a solution, the communication apparatus 1800 is configured to implement an operation performed by the donor node in the foregoing method embodiments.

For example, the processor 1810 is configured to implement a processing-related operation performed by the donor node in the foregoing method embodiments, and the transceiver 1830 is configured to implement a receiving/sending-related operation performed by the donor node in the foregoing method embodiments.

In another solution, the communication apparatus 1800 is configured to implement an operation performed by the IAB node in the foregoing method embodiments.

For example, the processor 1810 is configured to implement a processing-related operation performed by the IAB node in the foregoing method embodiments, and the transceiver 1830 is configured to implement a receiving/sending-related operation performed by the IAB node in the foregoing method embodiments.

In still another solution, the communication apparatus 1800 is configured to implement an operation performed by the AMF in the foregoing method embodiments.

For example, the processor 1810 is configured to implement a processing-related operation performed by the AMF in the foregoing method embodiments, and the transceiver 1830 is configured to implement a receiving/sending-related operation performed by the AMF in the foregoing method embodiments.

As shown in FIG. 19, an embodiment of this application provides a chip system 1900. The chip system 1900 (or may also be referred to as a processing system) includes a logic circuit 1910 and an input/output interface (input/output interface) 1920.

The logic circuit 1910 may be a processing circuit in the chip system 1900. The logic circuit 1910 may be coupled and connected to a storage unit, and invoke instructions in the storage unit, so that the chip system 1900 can implement the methods and functions in embodiments of this application. The input/output interface 1920 may be an input/output circuit in the chip system 1900, and outputs information processed by the chip system 1900, or inputs to-be-processed data or signaling information to the chip system 1900 for processing.

In a solution, the chip system 1900 is configured to implement an operation performed by the first donor node, the second donor node, the third donor node, the fourth donor node, the IAB node, or the AMF in the foregoing method embodiments.

For example, the logic circuit 1910 is configured to implement a processing-related operation performed by the first donor node in the foregoing method embodiments, and the input/output interface 1920 is configured to implement a sending and/or receiving-related operation performed by the first donor node in the foregoing method embodiments.

An embodiment of this application further provides a computer-readable storage medium. The computer-readable storage medium stores computer instructions for implementing the method performed by the terminal device or the method performed by the satellite in the foregoing method embodiments.

For example, when the computer program is executed by a computer, the computer is enabled to implement the method performed by the donor node, the method performed by the IAB node, or the method performed by the AMF in the foregoing method embodiments.

An embodiment of this application further provides a computer program product including instructions. When the instructions are executed by a computer, the computer is enabled to implement the method performed by the donor node, the method performed by the IAB node, or the method performed by the AMF in the foregoing method embodiments.

An embodiment of this application further provides a communication system. The communication system includes one or more of the first donor node, the second donor node, the third donor node, the fourth donor node, the IAB node, and the AMF in the foregoing embodiments.

For explanations and beneficial effects of related content of any wireless communication apparatus provided above, refer to the corresponding method embodiment provided above. Details are not described herein.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, a Windows operating system, or the like. The application layer may include applications such as a browser, a contacts application, text processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the execution body of the method provided in embodiments of this application may be a terminal device or a satellite, or may be a functional module that is in a terminal device or a satellite and that can invoke and execute the program.

Aspects or features in embodiments of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage device (for example, a hard disk drive, a floppy disk, a magnetic tape, or the like), an optical disc (for example, a compact disc (compact disc, CD), a digital versatile disc (digital versatile disc, DVD), or the like), a smart card, and a flash memory (for example, an erasable programmable read-only memory (erasable programmable read-only memory, EPROM), a card, a stick, a key drive, or the like).

The various storage media described in this specification may represent one or more devices and/or other machine-readable media configured to store information. The term "machine-readable medium" may include but is not limited to a radio channel, and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (storage module) may be integrated into the processor.

It should be further noted that the storage described in this specification is intended to include but is not limited to these storages and any other storage of a suitable type.

A person of ordinary skill in the art may be aware that the example units and algorithm steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps in the methods described in embodiments of this application. The storage medium includes any medium that can store program code, for example, a USB flash drive, a removable hard disk drive, a read-only memory (Read-Only Memory, ROM), a random access memory (Random Access Memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A communication method, comprising:
receiving, by a first donor node, integrated access and backhaul IAB authorization information, wherein the IAB authorization information indicates an authorization status of a first IAB node, the first IAB node comprises a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes; and
determining, by the first donor node based on the IAB authorization information, whether the first IAB node is allowed to serve user equipment UE.

2. A communication method, comprising:
sending, by a second donor node, integrated access and backhaul IAB authorization information to a first donor node, wherein the IAB authorization information indicates an authorization status of a first IAB node, the first IAB node comprises a first distributed unit and a first mobile termination, the first mobile termination has an RRC connection to the second donor node, and the first distributed unit has an F1 connection to or attempts to establish an F1 connection to the first donor node.

3. The method according to claim 2, wherein before sending, by the second donor node, the IAB authorization information to the first donor node, the method further comprises:
receiving, by the second donor node, the IAB authorization information from an access and mobility management function AMF in a core network.

4. The method according to claim 2 or 3, wherein before sending, by the second donor node, the IAB authorization information to the first donor node, the method further comprises:
receiving, by the second donor node, identification information of the first donor node from a third donor node, wherein the third donor node is a donor node that has an RRC connection to the first mobile termination before the first mobile termination establishes an RRC connection to the second donor node.

5. The method according to claim 4, wherein sending, by the second donor node, the IAB authorization information to the first donor node comprises: sending, by the second donor node, the IAB authorization information to the first donor node based on the identification information of the first donor node.

6. A communication method, comprising:
sending, by a third donor node, integrated access and backhaul IAB authorization information to a first donor node, wherein the IAB authorization information indicates an authorization status of a first IAB node, the first IAB node comprises a first distributed unit and a first mobile termination, the first mobile termination has an RRC connection to the second donor node, the third donor node is a donor node that has an RRC connection to the first mobile termination before the first mobile termination establishes an RRC connection to the second donor node, and the first distributed unit has an F1 connection to or attempts to establish an F1 connection to the first donor node.

7. The method according to claim 6, wherein before sending, by the third donor node, the IAB authorization information to the first donor node, the method further comprises:
receiving, by the third donor node, the IAB authorization information from the second donor node.

8. A communication method, comprising:
sending, by a first integrated access and backhaul IAB node, IAB authorization information to a first donor node, wherein the IAB authorization information indicates an authorization status of the first IAB node, the first IAB node comprises a first distributed unit and a first mobile termination, the first mobile termination has an RRC connection to the second donor node, and the first distributed unit has an F1 connection to the first donor node.

9. The method according to claim 8, wherein before sending, by the first IAB node, the IAB authorization information to the first donor node, the method further comprises:
receiving, by the first IAB node, the IAB authorization information from an access and mobility management function AMF in a core network;
receiving, by the first IAB node, the IAB authorization information from a fourth donor node, wherein the fourth donor node is a donor node that has an F1 connection to the first distributed unit before the first distributed unit establishes an F1 connection to the first donor node; or
receiving, by the first IAB node, the IAB authorization information from the second donor node.

10. A communication method, comprising:
sending, by an access and mobility management function AMF in a core network, integrated access and backhaul IAB authorization information to a first donor node, wherein the IAB authorization information indicates an authorization status of a first integrated access and backhaul IAB node, the first IAB node comprises a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes.

11. The method according to claim 10, wherein before sending, by the AMF, the IAB authorization information to the first donor node, the method further comprises:
receiving, by the AMF, identification information of the first donor node that is sent by the first IAB node or the second donor node.

12. The method according to claim 11, wherein sending, by the AMF, the IAB authorization information to the first donor node comprises: sending, by the AMF, the IAB authorization information to the first donor node based on the identification information of the first donor node.

13. A communication method, comprising:
sending, by a fourth donor node, integrated access and backhaul IAB authorization information to a first donor node, wherein the IAB authorization information indicates an authorization status of a first IAB node, the first IAB node comprises a first distributed unit and a first mobile termination, the first distributed unit comprises a first logical distributed unit and a second logical distributed unit, the first mobile termination has an RRC connection to a second donor node, the first logical distributed unit has an F1 connection to the fourth donor node, and the second logical distributed unit has an F1 connection to or attempts to establish an F1 connection to the first donor node.

14. A communication method, comprising:
sending, by a first integrated access and backhaul IAB node, identification information of a first donor node to an access and mobility management function AMF in a core network, wherein the first IAB node comprises a first distributed unit and a first mobile termination, the first mobile termination has an RRC connection to a second donor node, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

15. A communication method, comprising:
sending, by a second donor node, identification information of a first donor node to an access and mobility management function AMF in a core network, wherein the second donor node has an RRC connection to a first mobile termination, the first mobile termination is a mobile termination in a first integrated access and backhaul IAB node, the first IAB node further comprises a first distributed unit, the first distributed unit has an F1 connection to or attempts to establish an F1 connection to the first donor node, the AMF is configured to send IAB authorization information to the first donor node based on the identification information of the first donor node, and the IAB authorization information indicates an authorization status of the first IAB node.

16. A communication apparatus, wherein the apparatus is a donor node that has an F1 connection to or attempts to establish an F1 connection to a first distributed unit, and the apparatus comprises:
a receiving module, configured to receive integrated access and backhaul IAB authorization information, wherein the IAB authorization information indicates an authorization status of a first IAB node, the first IAB node comprises the first distributed unit and a first mobile termination, the first mobile termination has an RRC connection to a second donor node, and the apparatus and the second donor node are different donor nodes; and
a processing module, configured to determine, based on the IAB authorization information, whether the first IAB node is allowed to serve UE.

17. A communication apparatus, wherein the apparatus is a donor node that has an RRC connection to a first mobile termination, and the apparatus comprises:
a sending module, configured to send integrated access and backhaul IAB authorization information to a first donor node, wherein the IAB authorization information indicates an authorization status of a first IAB node, the first IAB node comprises a first distributed unit and the first mobile termination, and the first distributed unit has an F1 connection to or attempts to establish an F1 connection to the first donor node.

18. The apparatus according to claim 17, wherein the apparatus further comprises:
a receiving module, configured to receive the IAB authorization information from an access and mobility management function AMF in a core network.

19. A communication apparatus, wherein the apparatus is a donor node that has an RRC connection to a first mobile termination before the first mobile termination establishes an RRC connection to a second donor node, and the apparatus comprises:
a sending module, configured to send integrated access and backhaul IAB authorization information to a first donor node, wherein the IAB authorization information indicates an authorization status of a first IAB node, the first IAB node comprises a first distributed unit and the first mobile termination, the first mobile termination has an RRC connection to the second donor node, and the first distributed unit has an F1 connection to or attempts to establish an F1 connection to the first donor node.

20. The apparatus according to claim 19, wherein the apparatus further comprises:
a receiving module, configured to receive the IAB authorization information from the second donor node.

21. A communication apparatus, wherein the apparatus is an integrated access and backhaul IAB node, and the apparatus comprises:
a sending module, configured to send IAB authorization information to a first donor node, wherein the IAB authorization information indicates an authorization status of the apparatus, the apparatus comprises a first distributed unit and a first mobile termination, the first mobile termination has an RRC connection to the second donor node, and the first distributed unit has an F1 connection to or attempts to establish an F1 connection to the first donor node.

22. The apparatus according to claim 21, wherein the apparatus further comprises:
a receiving module, configured to receive the IAB authorization information from an access and mobility management function AMF in a core network, a fourth donor node, or the second donor node, wherein the fourth donor node is a donor node that has an F1 connection to the first distributed unit before the first distributed unit establishes an F1 connection to the first donor node.

23. A communication apparatus, wherein the apparatus is an access and mobility management function AMF, in a core network, that serves an integrated access and backhaul IAB node, and the apparatus comprises:
a sending module, configured to send IAB authorization information to a first donor node, wherein the IAB authorization information indicates an authorization status of a first integrated access and backhaul IAB node, the first IAB node comprises a first distributed unit and a first mobile termination, the first mobile termination has an RRC connection to a second donor node, the first distributed unit has an F1 connection to or attempts to establish an F1 connection to the first donor node, and the first donor node and the second donor node are different donor nodes.

24. A communication apparatus, wherein the apparatus is a donor node that has an F1 connection to a first logical distributed unit, and the apparatus comprises:
a sending module, configured to send integrated access and backhaul IAB authorization information to a first donor node, wherein the IAB authorization information indicates an authorization status of a first IAB node, the first IAB node comprises a first distributed unit and a first mobile termination, the first distributed unit comprises the first logical distributed unit and a second logical distributed unit, the first mobile termination has an RRC connection to a second donor node, and the second logical distributed unit has an F1 connection to or attempts to establish an F1 connection to the first donor node.

25. A communication apparatus, comprising a unit that has a function of implementing the method according to claim 1, the method according to any one of claims 2 to 5, the method according to claim 6 or 7, the method according to claim 8 or 9, the method according to any one of claims 10 to 12, the method according to claim 13, the method according to claim 14, or the method according to claim 15.

26. A computer program product, wherein the computer program product comprises computer program code, and when the computer program code is run, an apparatus is enabled to perform
the method according to claim 1,
the method according to any one of claims 2 to 5,
the method according to claim 6 or 7,
the method according to claim 8 or 9,
the method according to any one of claims 10 to 12,
the method according to claim 13,
the method according to claim 14, or
the method according to claim 15.

27. A computer-readable storage medium, wherein the computer-readable storage medium stores a computer program, and when the computer program is run,
an apparatus is enabled to perform the method according to claim 1,
an apparatus is enabled to perform the method according to any one of claims 2 to 5,
an apparatus is enabled to perform the method according to claim 6 or 7,
an apparatus is enabled to perform the method according to claim 8 or 9,
an apparatus is enabled to perform the method according to any one of claims 10 to 12,
an apparatus is enabled to perform the method according to claim 13,
an apparatus is enabled to perform the method according to claim 14, or
an apparatus is enabled to perform the method according to claim 15.

28. A chip system, comprising a processor, configured to: invoke a computer program from a storage and run the computer program,
to enable a communication apparatus in which the chip system is installed to perform the method according to claim 1,
to enable a communication apparatus in which the chip system is installed to perform the method according to any one of claims 2 to 5,
to enable a communication apparatus in which the chip system is installed to perform the method according to claim 6 or 7,
to enable a communication apparatus in which the chip system is installed to perform the method according to claim 8 or 9,
to enable a communication apparatus in which the chip system is installed to perform the method according to any one of claims 10 to 12,
to enable a communication apparatus in which the chip system is installed to perform the method according to claim 13,
to enable a communication apparatus in which the chip system is installed to perform the method according to claim 14, or
to enable a communication apparatus in which the chip system is installed to perform the method according to claim 15.

29. A communication system, comprising at least one of a first donor node, a second donor node, a third donor node, a fourth donor node, a first IAB node, and an AMF, wherein the first donor node is configured to perform the method according to claim 1, the second donor node is configured to perform the method according to any one of claims 2 to 5 and 15, the first IAB node is configured to perform the method according to claim 8, 9, or 14, the AMF is configured to perform the method according to any one of claims 10 to 12, the third donor node is configured to perform the method according to claim 6 or 7, and the fourth donor node is configured to perform the method according to claim 13.
